# EUROPEAN PATENT SPECIFICATION

(11) **EP 3 398 666 B1**
(45) Date of publication and mention of the grant of the patent: **03.03.2021**
(21) Application number: 16881767.4
(22) Date of filing: 27.12.2016
(51) Int. Cl.: A63F 13/5375, A63F 13/212, A63F 13/213, A63F 13/25, A63F 13/285, A63F 13/428, A63F 13/49, A63F 13/52, A63F 13/54, A63F 13/814, G06F 3/0484, G06T 19/00

(54) **GAME APPARATUS, PROCESSING METHOD, AND INFORMATION STORAGE MEDIUM**
SPIELVORRICHTUNG, VERARBEITUNGSVERFAHREN UND INFORMATIONSSPEICHERMEDIUM
APPAREIL DE JEU, PROCÉDÉ DE TRAITEMENT ET SUPPORT DE STOCKAGE D'INFORMATIONS

(30) Priority: 29.12.2015 JP 2015257580
(43) Date of publication of application: 07.11.2018
(73) Proprietor: BANDAI NAMCO Entertainment Inc., Minato-ku Tokyo 108-0014 (JP)
(72) Inventor: YAMASHITA, Tadashi, Tokyo 135-8513 (JP); IGARASHI, Hiroshi, Tokyo 135-8513 (JP); HARA, Kenichi, Tokyo 135-8513 (JP); KURODA, Yosuke, Tokyo 135-8513 (JP); KAWAKAMI, Hirotaka, Tokyo 135-8513 (JP); NAITO, Ryo, Tokyo 135-8513 (JP)
(74) Representative: Stratagem IPM Limited
(86) International application number: PCT/JP2016/088881
(87) International publication number: WO 2017/115793

(56) References cited:
- WO-A2-2015/048038
- WO-A2-2015/048038
- JP-A- H10 504 917
- JP-A- 2003 018 498
- JP-A- 2005 165 848
- JP-A- 2009 075 610
- JP-A- 2013 257 716
- NILSSON NIELS CHRISTIAN ET AL: "A comparison of different methods for reducing the unintended positional drift accompanying walking-in-place locomotion", 2014 IEEE SYMPOSIUM ON 3D USER INTERFACES (3DUI), IEEE, 29 March 2014 (2014-03-29), pages 103-110, XP032586735, DOI: 10.1109/3DUI.2014.6798850 [retrieved on 2014-04-15]
- CIRIO G ET AL: "Walking in a Cube: Novel Metaphors for Safely Navigating Large Virtual Environments in Restricted Real Workspaces", IEEE TRANSACTIONS ON VISUALIZATION AND COMPUTER GRAPHICS, IEEE SERVICE CENTER, LOS ALAMITOS, CA, US, vol. 18, no. 4, 1 April 2012 (2012-04-01), pages 546-554, XP011490408, ISSN: 1077-2626, DOI: 10.1109/TVCG.2012.60

## Description

### [TECHNICAL FIELD]

The present invention relates to a game apparatus, a process method, an information storage medium, and the like.

### [BACKGROUND ART]

Head-mounted display devices (HMDs) have conventionally been known. A user wearing the HMD on his or her head can experience a virtual reality (VR) world by watching an image displayed on a screen of the HMD. Patent document 1 and Patent document 2 disclose examples of conventional techniques related to such a device.

### [PRIOR ART DOCUMENTS]

### [PATENT DOCUMENTS]

[Patent document 1] Japanese Unexamined Patent Application Publication No. 1993 - 304646
[Patent document 2] Japanese Unexamined Patent Application Publication No. 2013-164737

WO 2015/048038 discloses methods and systems for warning a user of a head mounted display during a video game. A game is executed causing interactive scenes of the game to be rendered on a display portion of a head mounted display (HMD) worn by a user. A change in position of the HMD worn by the user, while the user is interacting with the game, is detected. The change in position is evaluated, the evaluation causing a signal to be generated when the change exceeds a pre-defined threshold value. When the signal is generated, content is sent to interrupt the interactive scenes being rendered on the display portion of the HMD Nilsson Niels Christian et al. "A comparison of different methods for reducing the unintended positional drift accompanying walk-in-place locomotion" 2014 IEEE symposium on 3D user interfaces, IEEE 29 March 2014, pages 103 - 110, is a study comparing different methods for reducing the unintended positional drift accompanying walking-in-place locomotion. While the user is close to the centre of a zone no interaction is provided, while once he leaves the central region different types of warning that become more intense as he strays further from the centre are issued and it is these different types of warning that are compared to determine which are most effective.

### [SUMMARY OF INVENTION]

### [PROBLEMS TO BE SOLVED BY THE INVENTION]

The line of sight of the user wearing the HMD is focused on the screen of the HMD. Thus, the user walking while wearing the HMD might hit a peripheral object.

To prevent such a danger, the HMD according to Patent document 1 includes a monochrome liquid crystal panel and a sensor. The monochrome liquid crystal panel gradually changes transmissivity of light from an external light source, so that the light can be transmitted and blocked. When the sensor detects a sudden movement or an impact, the monochrome liquid crystal panel changes to a transparent mode so that the user can see the outside world. Thus, the user can avoid the obstacle in the outside world.

The conventional technique according to Patent document 2 features an image capturing device that captures an image in a front direction of the user wearing the HMD and a distance meter that measures a distance to an object in the front direction. When a result of measurement by the distance meter indicates that there is an obstacle in the front direction of the user, an image based on image data, obtained with the image capturing device, is displayed on the screen of the HMD. The image data is displayed together with alerting information. Thus, the user can recognize the obstacle in front of him or her, and can avoid the obstacle by watching the image based on the image data obtained with the image capturing device.

These conventional techniques require, in order to avoid a risk of hitting an obstacle, the monochrome liquid crystal panel that gradually changes transmissivity of light, so that the light can be transmitted and blocked or the image capturing device enabling the user to see an image of the outside world in the front direction. Thus, a dedicated HMD provided with such a special device (the monochrome liquid crystal panel or the image capturing device) for avoiding danger is required. This means that HMDs without these devices cannot employ the methods according to these conventional techniques.

A game, using an HMD, should not be frequently interrupted to avoid danger. For example, the monochrome liquid crystal plane should not suddenly transition to the transparent mode during gameplay, so that the field of vision of the user includes the outside world.

According to some aspects of the present invention, a game apparatus, a process method, an information storage medium, and the like that can implement more appropriate alerting and the like in a game using a head-mounted display device can be provided.

### [MEANS FOR SOLVING THE PROBLEMS]

According to one embodiment of the invention, there is provided a game apparatus comprising:
an input process section (102) acquiring position information on a player wearing a head-mounted display device (200) and moving in a play area in a real world or a housing of the game apparatus;
a game process section (100) performing a process for a game played by the player in a virtual game space in which a plurality of objects are arranged; and
a display process section (120) performing a process of displaying a game image as viewed from a given viewpoint in the game space on the head-mounted display device,
the game process section
causing, when the player is detected to have approached or reached a boundary of an area set as a movable range of the player in the play area or the housing of the game apparatus, a first event for performing a preventing process that prevents the player from moving in a direction toward the boundary, the game process section controlling the preventing process in the first event based on movement speed of the player,
causing, when the player is detected to have moved beyond the boundary of the area, a second event for performing at least one of a process of changing an image display mode of the game image, a process of changing a game progress mode, and a process of terminating the game, and
wherein, as the preventing process in the first event, the game process section performs a process of displaying an alerting object at a position corresponding to the boundary of the area, a process of displaying warning information, a process of making a given object appear in the direction toward the boundary, a process of changing a display mode of the given object in the direction toward the boundary, or a process of making a notable object or a notable event for the player appear or occur in a direction different from the direction toward the boundary.

According to this aspect of the present invention, the position information on the player moving in the play area or the housing of the game apparatus is acquired. The game process for the player to play the game in the virtual game space in which the plurality of objects are arranged is performed. The game image as viewed from the given viewpoint in the game space is displayed on the head-mounted display device worn by the player. The first event occurs when the player is detected to have approached or reached the boundary of the area set as the movable range of the player. In the first event, the process that prevents the player from moving in the direction toward the boundary is performed. The second event occurs when the player is detected to have moved beyond the boundary of the area. In the second event, at least one of the process of changing the image display mode of the game image, the process of changing the game progress mode, and the process of terminating the game is performed. As described above, in this aspect of the present invention, the process that prevents the movement of the player in the boundary direction is performed in the first event. When the player is detected to have moved beyond the boundary even when the first event has occurred, the second event occurs to implement alerting with a level higher than that implemented with the process in the first event. Thus, a game apparatus and the like that can implement more appropriate alerting and the like in a game using the head-mounted display device can be provided.

With this configuration, the movement of the player in the boundary direction can be effectively prevented with the alerting object displayed at the position corresponding to the boundary of the area, the warning information displayed, the object appearing in the direction toward the boundary, the display mode of the object in the direction toward the boundary changed, or the notable object or the notable event for the player appearing or occurring in a direction different from the direction toward the boundary.

With this configuration, for example, the appropriate movement preventing process can be implemented with the first event, even when the movement speed of the player is high.

In the game apparatus,
the game process section may perform a process of lowering an image quality of the game image as the process of changing the image display mode of the game image.

With this configuration, the image quality of the game image is lowered when the second event occurs, so that appropriate alerting and the like can be implemented for the movement in the boundary direction without largely compromising the immersion of the player to the game.

In the game apparatus,
the game process section may perform a process of lowering brightness, saturation, contrast, or resolution of the game image, a process of changing a color image that is the game image to a monochrome image, or a process of blurring the game image as the process of lowering the image quality of the game image.

With this configuration, the brightness, saturation, contrast, or resolution of the game image is lowered, the game image changes to a monochrome image, or the game image changes to a blurred image when the second event occurs. Thus, appropriate alerting and the like can be implemented for the movement in the boundary direction without largely compromising the immersion of the player to the game.

In the game apparatus,
the game process section may perform a process of stopping a game progress as the process of changing the game progress mode.

With this configuration, the game progress stops when the second event occurs, whereby appropriate alerting and the like can be implemented for the movement in the boundary direction.

In the game apparatus,
the game process section may perform, when the player is detected to have returned to be on an inner side of the boundary of the area after the second event has occurred, a process of restoring the image display mode of the game image, or a process of restoring the game progress mode.

With this configuration, when the player returns to be on the inner side of the boundary of the area after the second event has occurred, the displayed image returns to the game image from the image different from the game image or the game progress mode is restored Thus, the player can continue the normal gameplay.

In the game apparatus,
the game process section may control the process of changing the image display mode of the game image, the process of changing the game progress mode, or the process of terminating the game, in the second event, based on movement speed of the player.

With this configuration, for example, appropriate alerting and the like can be implemented with the second event, even when the movement speed of the player is high.

In the game apparatus,
the game process section may perform a process of vibrating a vibration device or a process of outputting a warning sound in the first event or the second event.

With this configuration, appropriate alerting and the like can be implemented for the player, with the vibration for warning or the warning sound provided in addition to the processes in the first event or the second event.

In the game apparatus,
the display process section may perform a process of displaying the game image including an image of an audience at a location on an outer side of the area on the head-mounted display device.

With this configuration, for example, appropriate alerting and the like can be implemented for the player who got too excited in the gameplay and thus has moved toward the location of the audiences, in the virtual game space, outside the area of the real world.

According to a related technique , there is provided a game apparatus comprising:
an input process section acquiring at least position information on a player wearing a head-mounted display device and moving in a play area in a real world or a housing of the game apparatus;
a game process section performing a process for a game played by the player in a virtual game space in which a plurality of objects are arranged; and
a display process section performing a process of displaying a game image as viewed from a given viewpoint in the game space on the head-mounted display device,
the game process section performing a process of lowering brightness, saturation, contrast, or resolution of the game image, a process of changing a color image that is the game image to a monochrome image, or a process of blurring the game image when the player is detected to have approached or reached a boundary of an area set as a movable range of the player in the play area or the housing of the game apparatus or when the player is detected to have moved beyond the boundary.

According to this technique, when the player is detected to have approached or reached the boundary of the area set as the movable range of the player or to have moved beyond the boundary, the process of lowering the brightness, saturation, contrast, or resolution of the game image, the process changing a color image that is the game image to a monochrome image, or the process of blurring the game image is performed. The player can realize that he or she is inappropriately moving by watching the game image with an image quality thus lowered. Thus, appropriate alerting and the like can be implemented for the movement in the boundary direction without largely compromising the immersion of the player to the game and the like. All things considered, a game apparatus and the like that can implement more appropriate alerting and the like in a game using a head-mounted display device can be provided.

According to another embodiment of the invention, there is provided a process method comprising:
an input process of acquiring position information on a player wearing a head-mounted display device and moving in a play area in a real world or a housing of a game apparatus;
a game process of performing a process for a game played by the player in a virtual game space in which a plurality of objects are arranged; and
a display process of performing a process of displaying a game image as viewed from a given viewpoint in the game space on the head-mounted display device,
the game process including:
   causing, when the player is detected to have approached or reached a boundary of an area set as a movable range of the player in the play area or the housing of the game apparatus, a first event for performing a preventing process that prevents the player from moving in a direction toward the boundary, the game process section controlling the preventing process in the first event based on movement speed of the player
   causing, when the player is detected to have moved beyond the boundary of the area, a second event for performing at least one of a process of changing an image display mode of the game image, a process of changing a game progress mode, and a process of terminating the game,
   wherein, as the preventing process in the first event, the game process section performs a process of displaying an alerting object at a position corresponding to the boundary of the area, a process of displaying warning information, a process of making a given object appear in the direction toward the boundary, a process of changing a display mode of the given object in the direction toward the boundary, or a process of making a notable object or a notable event for the player appear or occur in a direction different from the direction toward the boundary.

According to a related technique, there is provided a process method comprising:
an input process of acquiring at least position information on a player wearing a head-mounted display device and moving in a play area in a real world or a housing of a game apparatus;
a game process of performing a process for a game played by the player in a virtual game space in which a plurality of objects are arranged; and
a display process of performing a process of displaying a game image as viewed from a given viewpoint in the game space on the head-mounted display device,
the game process including performing a process of lowering brightness, saturation, contrast, or resolution of the game image, a process of changing a color image that is the game image to a monochrome image, or a process of blurring the game image when the player is detected to have approached or reached a boundary of an area set as a movable range of the player in the play area or the housing of the game apparatus or when the player is detected to have moved beyond the boundary.

### BRIEF DESCRIPTION OF THE DRAWINGS

FIG. 1 is a diagram illustrating a configuration example of a game apparatus according to the present embodiment.
FIG. 2A and FIG. 2B are diagrams illustrating an example of an HMD used in the present embodiment.
FIG. 3A and FIG. 3B are diagrams illustrating another example of the HMD used in the present embodiment.
FIG. 4A and FIG. 4B are diagrams illustrating a play area.
FIG. 5 is a diagram illustrating a housing of the game apparatus.
FIG. 6 is a diagram illustrating an example of a game image generated in the present embodiment.
FIG. 7 is a diagram illustrating an example of a game image generated in the present embodiment.
FIG. 8 is a diagram illustrating an example of a game image generated in the present embodiment.
FIG. 9 is an elevated view of a concert hall in a VR space.
FIG. 10 is a diagram for describing a player moving on a stage.
FIG. 11 is a diagram for describing a player moving on a stage.
FIG. 12A to FIG. 12C are diagrams for describing a method according to the present embodiment.
FIG. 13 is a diagram for describing a method for displaying an alerting object in a first event.
FIG. 14 is a diagram for describing a method for changing an image display mode of the game image in a second event.
FIG. 15A and FIG. 15B are diagrams for describing a method for changing a game progress mode in the second event.
FIG. 16A and FIG. 16B are diagrams for describing a method for stopping the game progress or terminating the game in the second event.
FIG. 17A and FIG. 17B are diagrams for describing a method for preventing the player from moving in the first event.
FIG. 18A and FIG. 18B are diagrams for describing a method for controlling the first and second events based on the movement speed of the player.
FIG. 19 is a diagram for describing a method for generating vibration for warning or outputting a warning sound in the first and second events.
FIG. 20A and FIG. 20B are diagrams for describing a method for performing a first game process for a first game based on input information and a second game process for a second game based on line of sight information.
FIG. 21A to FIG. 21C are diagrams for describing a method for evaluating gameplay done by the player in the first and second games.
FIG. 22A to FIG. 22C are diagrams for describing a method for evaluating gameplay done by the player in the second game using the line of sight information.
FIG. 23A and FIG. 23B are diagrams for describing a method for evaluating gameplay done by the player in the first game that is a music game.
FIG. 24 is a flowchart illustrating a detailed process example according to the present embodiment.
FIG. 25 is a flowchart illustrating a detailed process example according to the present embodiment.

### DESCRIPTION OF EXEMPLARY EMBODIMENTS

An exemplary embodiment of the invention is described below. Note that the following exemplary embodiments do not in any way limit the scope of the invention defined by the claims laid out herein. Note also that all of the elements described in connection with the following exemplary embodiments should not necessarily be taken as essential elements of the invention.

### 1. Configuration

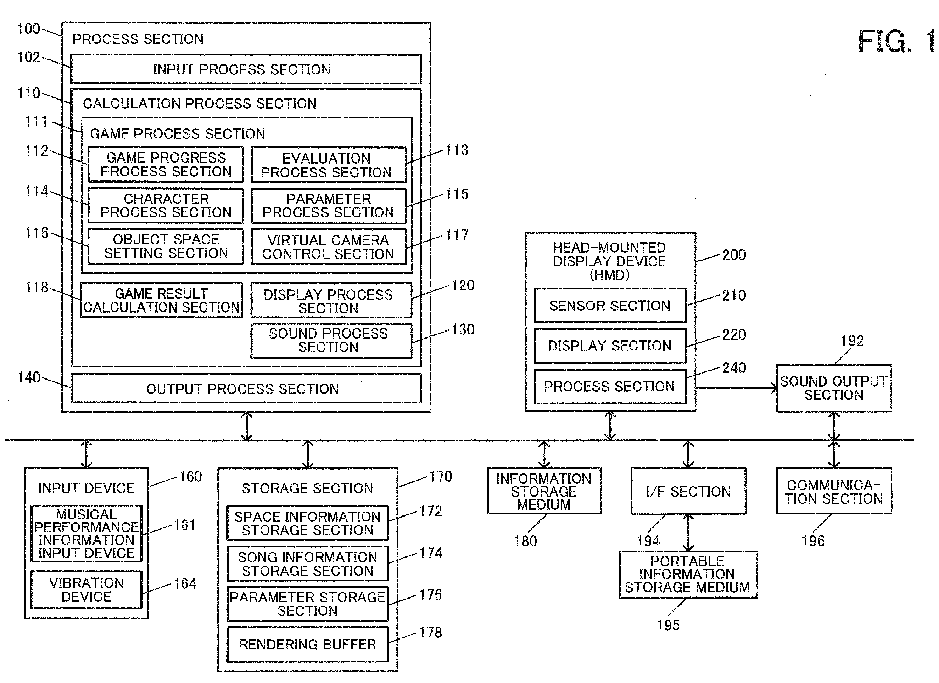

FIG. 1 illustrates a configuration example of a game apparatus (an image generation apparatus, a game system) according to the present embodiment. The game apparatus according to the present embodiment is not limited to the configuration illustrated in FIG. 1, and can be modified in various ways by omitting some of the components (sections) or adding another component.

An input device 160 is a device used by a player to input various types of information. The input device 160 may include a musical performance information input device 161 and a vibration device 164. The input device 160 may have a function of a game controller used by the player to input game operation information. For example, the game controller is implemented with an operation button, a direction instruction key, a joystick, a lever, or the like. In this example, the game controller and the musical performance information input device 161 may be provided in a single casing or may be provided in different casings.

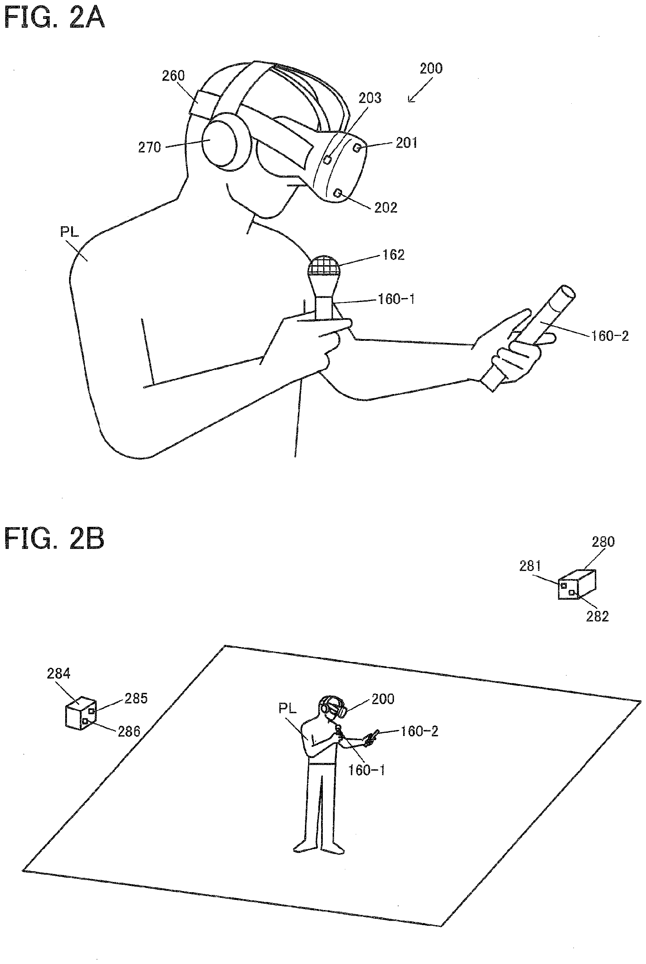

The musical performance information input device 161 is a device for inputting musical performance information on a musical performance by the player. For example, if a music game implemented by the present embodiment is a game involving singing, input information input from the input device 160 is musical performance information based on singing (vocal). The musical performance information input device 161 is implemented with a microphone 162 and the like illustrated in FIG. 2A. If the music game implemented by the present embodiment is a game involving playing a musical instrument, the input information input to the input device 160 is musical performance information based on a musical performance using the musical instrument, and the musical performance information input device 161 can be implemented with a musical instrument such as a string instrument (guitar), a percussion instrument (drum), and a keyboard instrument (piano, keyboard), or with a device replicating the musical instrument.

The vibration device 164 (vibration generation section) generates vibration for warning or the like, and is implemented by a vibration motor (vibrator) or the like for example. For example, the vibration motor generates vibration with an eccentric weight rotated. Specifically, eccentric weights are attached to both ends of a driving shaft, so that the motor itself swings. The vibration device 164 is not limited to the vibration motor, and may be implemented by a piezoelectric element or the like for example.

A storage section 170 stores therein various types of information. The storage section 170 functions as a work area for a process section 100, a communication section 196, and the like. The storage section 170 stores therein a game program and game data required for executing the game program. The function of the storage section 170 can be implemented by a semiconductor memory (dynamic rando access memory (DRAM), video RAM (VRAM)), a hard disk drive (HDD), a solid state drive (SSD), an optical disc device, or the like. The storage section 170 includes a space information storage section 172, a song information storage section 174, a parameter storage section 176, and a rendering buffer 178.

An information storage medium 180 (computer readable medium) stores therein a program, data, and the like. The function of the information storage medium 180 can be implemented by an optical disc (a digital versatile disc (DVD), a Blu-ray disc (BD), a compact disc (CD)), an HDD, a semiconductor memory (read only memory (ROM)), and the like. The process section 100 performs various processes according to the present embodiment based on a program (data) stored in the information storage medium 180. Thus, the information storage medium 180 stores therein a program for causing a computer (a device including the input device, the process section, the storage section, and an output section) to function as the sections according to the present embodiment (a program for causing a computer to perform processes of the sections).

A head-mounted display device 200 (hereinafter, referred to as an HMD as appropriate) is a device that is worn on the head of a player and displays an image before the player's eyes. The HMD 200 is preferably a non-transparent type, but may also be a transparent type. The HMD 200 may be what can be referred to as an eyepiece type HMD.

The HMD 200 includes a sensor section 210, a display section 220, and a process section 240. A modification where the HMD 200 is provided with a light emitting element may be employed. The sensor section 210 implements a tracking process such as head tracking for example. For example, the position and the orientation of the HMD 200 are identified through the tracking process performed with the sensor section 210. With the position and the orientation of the HMD 200 thus identified, a viewpoint position and a line of sight direction of the player can be identified.

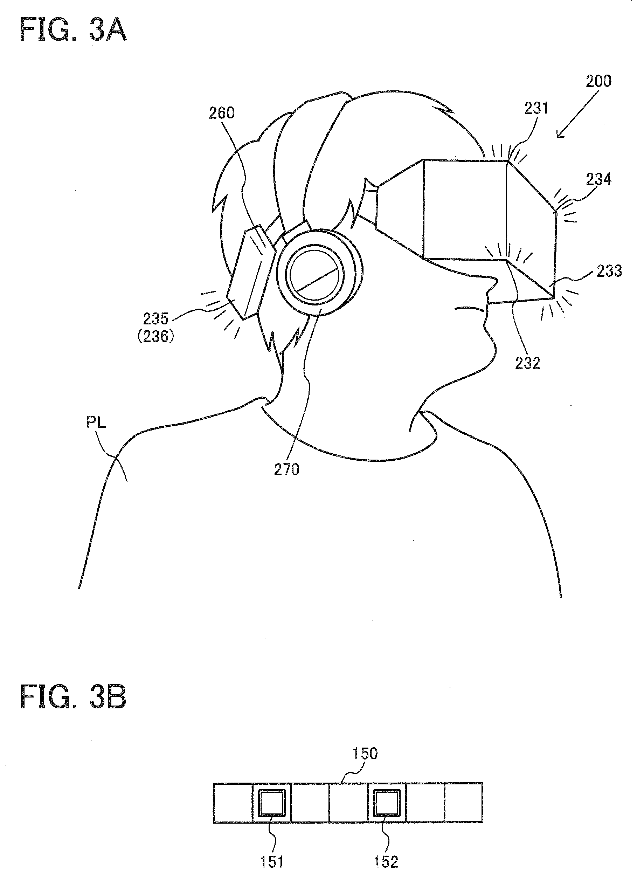

Various tracking schemes can be employed. One example of the tracking schemes is a first tracking scheme using a plurality of light receiving elements (such as photodiodes) serving as the sensor section 210 as will be described in detail later with reference to FIG. 2A and FIG. 2B. The position and the orientation of the HMD 200 (the head of the player) in the three-dimensional space in the real world are identified with the plurality of light receiving elements receiving light (such as a laser beam) from an external light emitting element (such as a light emitting diode (LED)). A second tracking scheme uses a plurality of light emitting elements (LEDs) provided to the HMD 200 as will be described in detail later with reference to FIG. 3A and FIG. 3B. The position and the orientation of the HMD 200 are identified with an external image capturing section capturing an image with light from the plurality of light emitting elements. A third tracking scheme uses a motion sensor, provided to the sensor section 210, to identify the position and the orientation of the HMD 200. For example, the motion sensor can be implemented with an acceleration sensor, a gyro sensor, or the like. For example, the position and the orientation of the HMD 200 in the three-dimensional space in the real world can be identified with a 6-axis motion sensor including a 3-axis acceleration sensor and a 3-axis gyro sensor. The position and the orientation of the HMD 200 may be identified with a combination of the first tracking scheme and the second tracking scheme, or a combination of the first tracking scheme and the third tracking scheme.

For example, the display section 220 of the HMD 200 can be implemented with a liquid crystal display (LCD), an organic electroluminescence (EL) display, or the like. For example, the HMD 200 is provided with first and second displays, serving as the display section 220, respectively provided in front of the left and the right eyes of the player, so that stereoscopic view can be implemented. The stereoscopic view is implemented with left-eye and right-eye images, with parallax, generated to be respectively displayed on the first and the second displays.

The process section 240 of the HMD 200 performs various processes required in the HMD 200. For example, the process section 240 performs a control process for the sensor section 210, a display control process for the display section 220, or the like. The process section 240 further performs a 3D audio process to simulate three-dimensional direction, distance, and propagation of sound. Thus, a process of controlling a sound field in the three-dimensional space is performed. Sound as a result of such a 3D audio process is output to a sound output section 192, implemented by a headphone or the like, through a headphone terminal provided to the HMD 200.

The sound output section 192 outputs sound generated according to the present embodiment, and can be implemented with a headphone, or may be implemented with a speaker or the like provided to a television receiver or an audio device.

An interface (I/F) section 194 performs an interface process for a portable information storage medium 195. The function of the I/F section 194 can be implemented with an application specific integrated circuit (ASIC) for the I/F process. The portable information storage medium 195 is a storage device that stores therein various types of information from the user, and holds the information without power supply. The portable information storage medium 195 can be implemented with an integrated circuit (IC) card (memory card), a universal serial bus (USB) memory, a magnetic card, or the like.

The communication section 196 communicates with external apparatuses (other devices) through a wired or wireless network. The function of the communication section 196 can be implemented with a communication ASIC, hardware such as a communication processor, or a communication firmware.

The program (data) for causing a computer to function as the sections according to the present embodiment may be distributed to the information storage medium 180 (or the storage section 170 or an auxiliary storage device 195) from an information storage medium of a server (host device) through a network and the communication section 196. The scope of the present invention can include such a configuration where the information storage medium of the server (host device) is used.

The process section 100 (processor) performs a game process, a game result calculation process, a display process, a sound process, or the like, based on input information from the input device 160, tracking information on the HMD 200 (the position and the orientation of the HMD or a viewpoint position and a line of sight direction), and a program.

Processes (functions) according to the present embodiment performed by sections of the process section 100 can be implemented by a processor (processor including hardware). For example, the processes according to the present embodiment can be implemented by a processor that operates based on information such as a program and a memory that stores therein the information such as the program. For example, the processor may implement the functions of the sections in discrete hardware or in integrated hardware. For example, the process may include hardware and the hardware may include at least one of a circuit that processes a digital signal and a circuit that processes an analog signal. For example, the processor may include one or a plurality of circuit devices (such as an integrated circuit (IC) for example) or one or a plurality of circuit elements (such as a resistor and a capacitor for example) mounted on a circuit board. For example, the processor may be a central processing unit (CPU). However, the processor is not limited to the CPU, and various processors such as a graphics processing unit (GPU) or a digital signal processor (DSP) may be used. The processor may be a hardware circuit such as an application specific integrated circuit (ASIC). The processor may include an amplifier circuit, a filter circuit, or the like that processes an analog signal. The memory (storage section 170) may be a semiconductor memory such as a static random access memory (SRAM) and a dynamic RAM (DRAM) or may be a resistor. Furthermore, the memory may be a magnetic storage device such as a hard disk device (HDD) or may be an optical storage device such as an optical disc device. For example, the memory stores therein a computer-readable command, and the processes (functions) of the sections of the process section 100 are implemented with the processor executing the command. This command may be a set of commands forming a program, or may be a command for instructing an operation to a hardware circuit of the processor.

The process section 100 includes an input process section 102, a calculation process section 110, and an output process section 140. The calculation process section 110 includes a game process section 111, a game result calculation section 118, a display process section 120, and a sound process section 130. As described above, the processes according to the present embodiment performed by these sections may be implemented by a processor (or a processor and a memory). Various modifications may be made with some of these components (sections) omitted, or another component added.

The input process section 102 performs an input process including: a process of receiving input information or tracking information; a process of reading information from the storage section 170; and a process of receiving information through the communication section 196. For example, the input process section 102 performs the input process including: a process of acquiring input information input by the player using the input device 160 or tracking information (position information and line of sight information on the player) detected by the sensor section 210 or the like of the HMD 200; a process of reading information, designated by a read command, from the storage section 170; and a process of receiving information from an external apparatus (such as a server or another game apparatus) outside the game apparatus through a network. The receiving process includes a process of instructing the communication section 196 to receive information, acquiring the information received by the communication section 196, and writing the information to the storage section 170.

For example, the calculation process section 110 performs various calculation processes for the game process, the game result calculation process, the display process, the sound process, or the like.

The game process section 111 (a program module for a game process) performs various game processes for the player to play the game. The game process section 111 includes a game progress process section 112, an evaluation process section 113, a character process section 114, a parameter process section 115, an object space setting section 116, and a virtual camera control section 117.

The game progress process section 112 performs a process of starting a game when a game start condition is satisfied, a process of making the game progress, or a process of terminating the game when a game termination condition is satisfied. The evaluation process section 113 performs an evaluation process for gameplay by the player. For example, the evaluation process is performed for a player's musical performance or a player's operation in a music game. The song information storage section 174 stores therein song information used for the music game.

The character process section 114 performs various processes related to a character. For example, a process of moving the character in an object space (game space) and a process of making the character operate are performed. For example, the process of making the character operate can be implemented with a motion process (such as motion playback) using motion data. The parameter process section 115 performs a calculation process for various parameters used in the game (game parameters). For example, a process of increasing/reducing a value of the parameter is performed. The parameter storage section 176 stores therein information on the parameter.

The object space setting section 116 performs a setting process for an object space (virtual three-dimensional space) in which a plurality of objects are arranged. For example, a process of arranging and setting various objects (formed by a polygon, or a primitive surface such as a free-form surface or a subdivision surface) representing various displayed objects such as a character (such as a person, an animal, or a robot), a map (terrain), a building, audience seats, a course (road), woods, a wall, and a water surface in the object space. Specifically, a position and a rotational angle (that is the same as an orientation or a direction) of an object in a world coordinate system are determined, and the object is arranged at the position (X, Y, Z) at the rotational angle (rotational angles about X, Y, and Z axes). Specifically, the space information storage section 172 of the storage section 170 stores therein space information that is information on the positions and the rotational angles (directions) of a plurality of objects (part objects) in the object space and the like. For example, the object space setting section 116 performs a process of updating the space information for each frame.

The virtual camera control section 117 performs a control process for a virtual camera (a viewpoint and a reference virtual camera) for generating an image as viewed from a given (any appropriate) viewpoint in the object space. Specifically, a process of controlling the position (X, Y, Z) or the rotational angle (rotational angles about the X, Y, and Z axes) of the virtual camera (a process of controlling the viewpoint position, the line of sight direction, or an angle of view) is performed. The virtual camera corresponds to the viewpoint of the player. When stereoscopic view is implemented, a left-eye first viewpoint (left-eye first virtual camera) and a right-eye second viewpoint (right-eye second virtual camera) are set.

The game result calculation section 118 performs a process of calculating a game result of the player. For example, a calculation process is performed for the game result such as a score or a point obtained by the player through gameplay.

The display process section 120 performs a process of displaying a game image. For example, a rendering process is performed based on results of various processes (a game process, a simulation process) performed by the process section 100 to generate an image, and the image is displayed on the display section 220 of the HMD 200. Specifically, a geometry process such as coordinate transformation (world coordinate transformation, camera coordinate transformation), a clipping process, a perspective transformation, or a light source process is performed. Rendering data (coordinates of the vertex position of the primitive surface, texture coordinates, color data, a normal vector, an α value, or the like) is generated based on a result of the process. An object (one or a plurality of primitive surfaces) after the perspective transformation (after the geometry process) is rendered in the rendering buffer 178 (a frame buffer, a work buffer or the like that can store image information in a unit of pixels), based on the rendering data (primitive surface data). Thus, an image in the object space as viewed from the virtual camera (a given viewpoint, a left-eye, right-eye, first, or second viewpoint) is generated. The rendering process performed by the display process section 120 can be implemented with a vertex shader process, a pixel shader process, or the like.

The sound process section 130 performs a sound process based on a result of various processes performed by the process section 100. Specifically, game sound such as a song (music, background music (BGM)), a sound effect, or a voice is generated to be output by the sound output section 192. A part (the 3D audio process for example) of the sound process performed by the sound process section 130 may be implemented by the process section 240 of the HMD 200.

The output process section 140 performs an output process of outputting various types of information. For example, the output process section 140 performs the output process including: a process of writing information to the storage section 170; and a process of transmitting information through the communication section 196. For example, the output process section 140 performs a process of writing information, designated by a write command, to the storage section 170, and a process of transmitting information to an external apparatus (such as a server or another game apparatus) outside the game apparatus through a network. This transmission process is a process of instructing the communication section 196 to transmit information, and a process of instructing the information, to be transmitted, to the communication section 196.

As illustrated in FIG. 1, the game apparatus according to the present embodiment includes the input process section 102, the game process section 111, and the display process section 120. The input process section 102 acquires position information on a player wearing the HMD 200 and moving in the play area in the real world or a housing of the game apparatus. For example, when the position information and the direction information on the HMD 200 are detected by the tracking process, the input process section 102 acquires the position information on the HMD 200 as the position information on the player. The input process section 102 acquires viewpoint position information and line of sight information (line of sight direction information) on the player identified with the position information and the direction information on the HMD 200.

The game process section 111 performs a process for a game played by the player, in the virtual game space in which a plurality of objects are arranged. For example, a plurality of objects, such as a character, are arranged in the game space (virtual three-dimensional space) serving as the object space. The game process section 111 implements various game processes (such as a game progress process, a character process, an object space setting process, or a virtual camera control process) to implement a game in the game space. The display process section 120 performs a process of displaying a game image in the game space, as viewed from a given viewpoint (a left-eye, a right-eye, a first, or a second viewpoint), on the display section 220 (a first or a second display) of the HMD 200. Specifically, a process of displaying a game image in the object space serving as the game space, as viewed from the viewpoint of the player (virtual camera), is performed. This viewpoint of the player is set based on the viewpoint position information and the line of sight information (line of sight direction information) on the player.

In the present embodiment, the game process section 111 causes a first event when the player is detected to have approached or reached a boundary of an area set as a movable range of the player in the play area or the housing of the game apparatus. For example, the first event thus caused involves a preventing process that prevents the player from moving in a direction toward the boundary of the area.

On the other hand, the game process section 111 causes a second event when the player is detected to have moved beyond the boundary of the area. For example, the second event thus occurred involves at least one of a process of changing an image display mode of the game image, a process of changing a game progress mode, and a process of terminating the game.

The play area (a play field, a play space) is an area defined (set) in advance as an area (a field, a space) where the user performs the gameplay. For example, the play area includes a range in which the position information on the player or the like can be tracked. For example, the play area may be an area surrounded by walls, or may be an open-space area. The game apparatus may have a housing that can incorporate the player. In such a configuration, the space within such a housing is the space within the housing of the game apparatus. The space within the housing of the game apparatus may be provided with various devices (operation devices for example) and equipment used by the player for the gameplay.

In the present embodiment, the area, representing the movable range of the player, is set (defined) in the play area or the housing of the game apparatus. For example, this area may be set with an operator inputting area setting information (such as coordinates) for initial setting for the game apparatus. For example, the setting information on the area is stored in the storage section 170, as registered information, in advance.

In the present embodiment, the first event occurs when the player is detected to have approached or reached the boundary of the area. The player can be detected to have approached or reached the boundary of the area based on the position information on the player acquired by the input process section 102 or the like. For example, the player can be detected to have approached or reached the boundary of the area by obtaining a distance between the position of the player and the boundary or by determining whether or not the position of the player is on the boundary.

The first event thus occurred involves the preventing process that prevents the player from moving in the direction toward the boundary of the area. Thus, the player stops moving to stay where he or she is, or moves in a direction opposite to the direction toward the boundary of the area, in a direction crossing the direction toward the boundary of the area, or the like. This preventing process can be performed using an object appearing in the game space. For example, when the first event occurs, an object for the preventing process appears in the game space, and the player is prevented from moving in the direction toward the boundary of the area by using the object.

In the present embodiment, the second event occurs when the player is detected to have moved beyond the boundary of the area. For example, the second event may occur when the position (representative position) of the player moves beyond the boundary of the area, when the position moves by a predetermined distance beyond the boundary, or when a predetermined period of time has elapsed after the position has moved beyond the boundary. When the second event occurs, the process of changing the image display mode of the game image, the process of changing the game progress mode, or the process of terminating the game is performed. Thus, the movement of the player, who has moved beyond the boundary instead of stopping the movement in the boundary direction despite the preventing process in the first event, can be provided with a higher level of movement preventing measure.

For example, the game process section 111 performs a process of lowering the image quality of the game image as the process of changing the image display mode of the game image. Specifically, when the second event occurs, a process of lowering the image quality (display quality) from that of the game image displayed while the player is playing the game in the area in a normal state is performed. For example, the game process section 111 instructs the display process section 120 (image process section) to lower the image quality of the game image when the second event occurs.

Specifically, the game process section 111 performs the process of lowering the image quality of the game image (the process of changing the image display mode of the game image) including: a process of lowering brightness, saturation, contrast, or resolution of the game image; a process of changing a color image that is the game image to a monochrome image; and a process of blurring the game image. For example, the brightness of the game image may be lowered, so that the screen becomes darker than in a state where the normal game image is displayed. Alternatively, the saturation of the game image may be lowered so that an image that is less colorful than the normal game image is displayed. Alternatively, the contrast of the game image may be lowered to reduce the difference in brightness between a bright portion and a dark portion of the game image. Alternatively, the number of pixels for forming the game image may be reduced to lower the resolution. Alternatively, the game image displayed as a color image (RGB) in the normal state is changed to a monochrome image. Alternatively, an image more blurred than the game image in the normal state may be displayed with a blurring filter process performed on the game image. For example, these processes of lowering the image quality of the game image may be implemented by performing post processing, such as image processing, for a rendering image serving as the game image. Specifically, the game process section 111 may instruct the display process section 120 to perform image processing for lowering the image quality of the rendering image serving as the game image, for example.

The process of lowering the image quality of the game image is not limited to the processes described above as examples, and may further include various image quality lowering processes of making the player hesitate from continuing the gameplay under the current condition. The process of changing the image display mode of the game image is not limited to the process of lowering the image quality of the game image, and various modifications may be made. For example, the image display mode may be changed to obtain an image appearing to be different as a whole from the game image. For example, the process of changing the image display mode of the game image may be performed by displaying an image completely different from the game image. For example, an image of a wire frame with a single color may be displayed. Furthermore, an image with a shape or a contour of a displayed object, displayed on the game image, slightly remaining may be displayed.

When the player is detected to have approached or reached the boundary of the area, the game process section 111 may perform a process of changing an output mode of game sound. For example, the process of changing the output mode of the game sound may be performed as a process of lowering the volume of the game sound. Specifically, when the second event occurs, the volume of the game sound (such as a song or a BGM) output is lowered from that in the state where the game is normally played with the player within the area. For example, the game process section 111 instructs the sound process section 130 to lower the volume of the game sound when the second event occurs. The process of changing the output mode of the game sound is not limited to this process of lowering the volume of the game sound, and may include various processes of making the player hesitate from continuing the gameplay under the current condition. For example, processes such as modulating the game sound in the normal state and mixing an additional sound effect or the like to the game sound may be performed.

The game process section 111 performs a process of stopping a game progress as the process of changing the game progress mode. For example, the game progress is stopped (paused) by stopping the elapse of time in the game space, or stopping a movie display of the game image. The process of changing the game progress mode may include various processes. For example, the game process progresses based on a predetermined sequence. When the second event occurs, the process of changing the game progress mode is performed by changing the sequence. For example, the process of changing the game progress mode may be a process of making the game return to a start sate. For example, a game, starting in response to coin insertion or game currency payment by the player so that the gameplay (a single gameplay) is enabled, returns to a state where the game starts (game is reset) so that the gameplay can be restarted.

When the player is detected to have returned to be on an inner side of the boundary of the area after the second event has occurred, the game process section 111 performs a process of restoring the image display mode of the game image, or a process of restoring the game progress mode. For example, when the image quality of the game image has been lowered in response to the occurrence of the second event, the lowered image quality is reset to the image quality in the normal state. When the image that is completely different from the game image has been displayed, the displayed image returns to the game image. When the game progress has been stopped in response to the occurrence of the second event, the game progress that has been stopped is resumed and thus the normal game progress is resumed.

The game process section 111 performs the preventing process in the first event, including: a process of displaying an alerting object at a position corresponding to the boundary of the area; a process of displaying warning information; a process of making a given object appear in the direction toward the boundary; a process of changing a display mode of a given object in the direction toward the boundary; and a process of making a notable object or a notable event for the player appear or occur in a direction different from the direction toward the boundary.

For example, when the first event occurs, an alerting object is displayed at a position in a VR space corresponding to the boundary of the area (the boundary position or a position on the inner or the outer side of the boundary). Specifically, the alerting object appears at a position corresponding to the boundary of the area in the game space serving as the object space. For example, the alerting object is preferably displayed entirely over the game image, but is not limited to a specific shape or the like. Alternatively, a warning letter, sign, or the like is displayed when the first event occurs. Alternatively, an object such as a monster or an avatar (a model object) appears in the direction toward the boundary when the first event occurs. For example, an object with a shape or a property repelling the player appears. Alternatively, the display mode of a given object in the direction toward the boundary changes. For example, image or shape information on a color, a texture, or the like of an object on the side of the boundary direction (in the direction toward the boundary) is changed. For example, the display mode of the object, in the direction toward the boundary, is changed to be alerting or to prevent the player from moving in the boundary direction (hesitate from moving in the boundary direction). Alternatively, a notable object or a notable event for the player appears or occurs in a direction different from the direction toward the boundary, when the first event occurs. Thus, the player is guided to move in the direction toward the notable object or a location where the notable event is occurring. For example, the notable object or the notable event to be an important matter appears or occurs. For example, a notable event occurs to block the direction toward the boundary and provide an open road in a direction different from the boundary direction.

The game process section 111 controls the preventing process in the first event based on movement speed of the player. For example, an occurrence timing of the first event is controlled based on the movement speed of the player. For example, the control is performed in such a manner that the occurrence timing of the first event is set to be earlier for a higher movement speed of the player. When the first event occurs in response to the player approaching the boundary of the area, a determining distance for determining that the player has approached the boundary is controlled based on the movement speed of the player. For example, the determining distance is set to be longer for a higher movement speed of the player.

The game process section 111 controls the process of changing the image display mode of the game image, the process of changing the game progress mode, or the process of terminating the game, in the second event, based on the movement speed of the player. For example, a timing of changing the displayed image, a timing of changing the progress mode, or a timing of terminating the game is controlled based on the movement speed. For example, these timings are controlled to be earlier for a higher movement speed of the player. A rate of changing the displayed image is controlled based on the movement speed. For example, the rate of changing the displayed image is set to be larger for a higher movement speed of the player.

The game process section 111 performs a process of vibrating the vibration device 164 or a process of outputting a warning sound in the first event or the second event. For example, when the first event occurs, the vibration device 164 vibrates or the sound output section 192 outputs the alarm sound in addition to the process that prevents the player from moving in the direction toward the boundary. Alternatively, when the second event occurs, the vibration device 164 vibrates or the sound output section 192 outputs the alarm sound in addition to the process of changing the image display mode of the game image, the process of changing the game progress mode, or the process of terminating the game. The vibration device for the warning may be provided to a device other than the input device 160, and thus may be provided to the HMD 200 or the like for example.

The display process section 120 performs a process of displaying the game image, including an image of an audience at a location on an outer side of the area, on the HMD 200. For example, the audience seats are set to be arranged at a location outside the area in the game space. When the player approaches the boundary of the area in the real world, a virtual player (a viewpoint of the player in the game space) corresponding to the player approaches the audient seats in the game space. When the player moves beyond the boundary of the area in the real world, the virtual player moves into the audience seat area in the game space.

The process according to the present embodiment is not limited to the processes described above, and may be modified in various ways. For example, the game process section 111 may perform the process of lowering the brightness, saturation, contrast, or resolution of the game image, the process of changing a color image that is the game image to a monochrome image, or the process of blurring the game image when the player is detected to have approached or reached the boundary of the area set as a movable range of the player in the play area or the housing of the game apparatus or when the player is detected to have moved beyond the boundary. For example, when the player is detected to have approached or reached the boundary or is detected to have moved beyond the boundary, the process of lowering the image quality of the game image is performed instead of causing the first event.

### 2. Method according to the present embodiment

Next, a method according to the present embodiment is described in detail. The description is given below with a music game (such as a live stage performance game or a karaoke game) based on a musical performance involving singing mainly serving as an example of a game employing the method according to the present embodiment. However, the game employing the method according to the present embodiment is not limited to this and may be a music game (a game for competing the proficiency level regarding rhythm or musical performance) based on a musical performance of a musical instrument such as a string instrument (guitar), a percussion instrument (drum), or a keyboard instrument (piano, keyboard). The method according to the present embodiment may be applied to various other games such as a game featuring communications with a character of the opposite sex or the like (a human relationship simulation game), a battle game, a role-playing game (RPG), a robot game, a card game, a sport game, or an action game.

### 2.1 HMD

FIG. 2A illustrates an example of the HMD 200 used for the game apparatus according to the present embodiment. As illustrated in FIG. 2A, the HMD 200 is provided with a plurality of light receiving elements (photodiodes) 201, 202, and 203. The light receiving elements 201 and 202 are provided on the front surface side of the HMD 200, whereas the light receiving element 203 is provided on the right side surface of the HMD 200. Note that unillustrated light receiving elements are further provided on the left side surface, the upper surface, or the like of the HMD.

A player PL is holding input devices 160-1 and 160-2 respectively on his or her left and right hands. The input devices 160-1 and 160-2 are provided with a plurality of light receiving elements (not illustrated) as in the case of the HMD 200. The input device 160-1 is provided with the microphone 162 (sound input device). The player PL sings with his or her mouth directed toward the microphone 162 in the game involving singing. The input devices 160-1 and 160-2 also function as a game controller, and are provided with an operation button, a direction instruction key, or the like (not illustrated). Only a single input device 160 may be held by the player.

The HMD 200 is provided with a headband 260 and the like, and thus the player PL can stably wear the HMD 200 with excellent fitting comfort on his or her head. The HMD 200 is provided with an unillustrated headphone terminal. For example, the player PL can listen to the game sound as a result of the 3D audio process, with a headphone 270 (sound output section 192) connected to the headphone terminal. The player PL inputs operation information and enjoys the gameplay by operating the input devices 160-1 and 160-2, functioning as the game controller, or by an operation involving nodding or shaking his or her head. The operation involving nodding or shaking the head can be detected by the sensor section 210 or the like of the HMD 200.

As illustrated in FIG. 2B, base stations 280 and 284 are arranged in the play area of the player PL. The base station 280 is provided with light emitting elements 281 and 282, and the base station 284 is provided with light emitting elements 285 and 286. For example, the light emitting elements 281, 282, 285, and 286 are implemented with LEDs that emit laser beams (such as infrared laser beams). The base stations 280 and 284 radially emit laser beams by using the light emitting elements 281, 282, 285, and 286, for example. The light receiving elements 201 to 203 and the like provided to the HMD 200 illustrated in FIG. 2A receive the laser beams from the base stations 280 and 284 so that the tracking for the HMD 200 is implemented, whereby the position and the orientation of the head of the player PL can be detected. Unillustrated light receiving elements provided to the input devices 160-1 and 160-2 receive the laser beams from the base stations 280 and 284 so that the input devices 160-1 and 160-2 can be tracked, whereby the positions and the directions of the input devices 160-1 and 160-2 can be detected. Thus, an image of a microphone corresponding to the input device 160-1 or the like can be displayed on the game image, for example.

FIG. 3A illustrates another example of the HMD 200. The HMD 200 illustrated in FIG. 3A is provided with a plurality of light emitting elements 231 to 236. For example, these light emitting elements 231 to 236 are implemented with LEDs or the like. The light emitting elements 231 to 234 are provided on the front surface side of the HMD 200, and the light emitting element 235 and the light emitting element 236 (not illustrated) are provided on the back surface side. These light emitting elements 231 to 236 emit light in a wavelength band of visible light (light emission) for example. Specifically, the light emitting elements 231 to 236 emit light of colors different from each other. An image capturing section 150 illustrated in FIG. 3B is provided on the forward side of the player PL, and captures an image of the light from the light emitting elements 231 to 236. Thus, the captured image obtained by the image capturing section 150 includes spots of the light from the light emitting elements 231 to 236. The head (HMD) of the player PL is tracked with image processing executed on the captured image, whereby the three-dimensional position, movement, and the like of the head of the player PL are detected.

For example, as illustrated in FIG. 3B, the image capturing section 150 is provided with first and second cameras 151 and 152. The position of the head of the player PL in a depth direction and the like can be detected by using first and second captured images respectively captured by the first and the second cameras 151 and 152. Furthermore, the rotational angle (line of sight) of the head of the player PL can be detected based on motion detection information obtained by a motion sensor provided to the HMD 200. Thus, with such an HMD 200, an image, in the virtual three-dimensional space, corresponding to any direction of the player PL in the full 360° range around the player PL, (an image as viewed from the virtual camera corresponding to the viewpoint of the player) can be displayed on the display section 220 of the HMD 200. LEDs emitting infrared light, instead of the visible light, may be used as the light emitting elements 231 to 236. For example, the position, the movement, and the like of the head of the player may be detected by any other method including a method of using a depth camera or the like for example.

The tracking process for detecting the viewpoint information (such as the viewpoint position or the line of sight direction) and the position information on the player is not limited to that described above with reference to FIG. 2A to FIG. 3B. For example, the tracking process may be implemented solely by the HMD 200 by using the motion sensor and the like provided to the HMD 200. Thus, the tracking process may be implemented without an external device such as the base stations 280 and 284 in FIG. 2B and the image capturing section 150 in FIG. 3B. Alternatively, the viewpoint information and the like on the player may be detected by using various known methods for viewpoint tracking such as eye tracking, face tracking, and head tracking. In an example of employing the eye tracking, the position, the shape, and the like of the pupil of each of the left and the right eyes of the player are recognized. Then, the viewpoint tracking is implemented with the viewpoint information on the player acquired by identifying the positions and the line of sight directions of the left and the right eyes. For example, the eye tracking can be implemented by capturing images of the left and the right eyes of the player with the image capturing section, and performing an image recognition process, for the pupil or the like, on the captured images. When the face tracking is employed, an image of the face of the player is captured by the image capturing section, and an image recognition process for the face is performed. Then, the viewpoint tacking is implemented with the viewpoint position and the line of sight direction of the player obtained by identifying the position and the orientation of the face of the player based on a result of the image recognition process.

### 2.2 Play area and housing of game apparatus

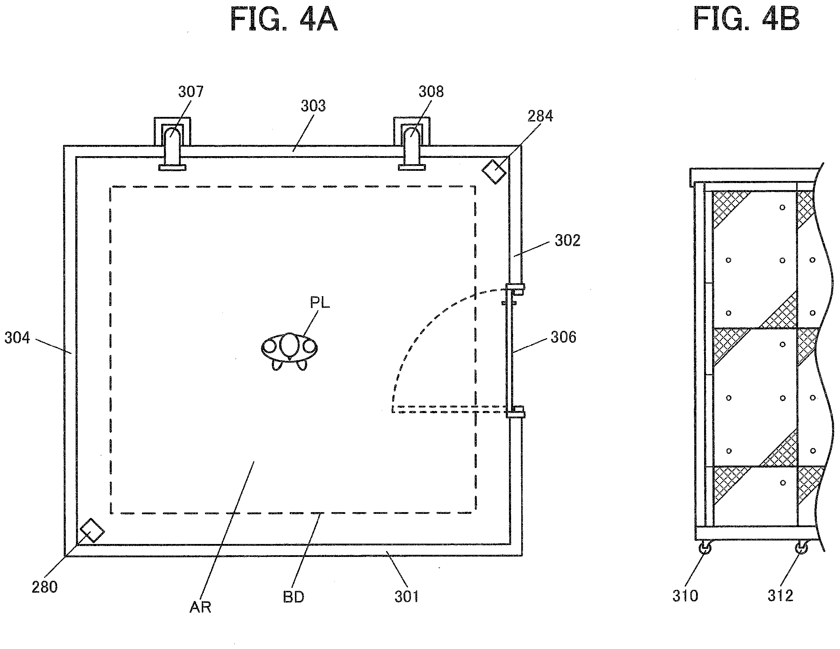

FIG. 4A and FIG. 4B illustrate an example of play area where the game according to the present embodiment is implemented. The play area is implemented with a box-shaped sound proof room. As illustrated in FIG. 4A, the box-shaped room has walls 301, 302, 303, and 304, a door 306, and ventilation devices 307 and 308. As illustrated in FIG. 4B, the box-shaped room has a bottom plate provided with wheels 310 and 312, and thus is movable. The player PL opens the door 306 and enters the room to play the game. The space in the room serves as the play area (play space) for the player PL.

As illustrated in FIG. 4A, an area AR, defining the movable range of the player PL, is set in the play area in the box-shaped room. In the area AR, the viewpoint information (viewpoint position, line of sight direction) and the position information on the player PL can be tracked by using the base stations 280 and 284 and the like. The tracking is not guaranteed at a position outside a boundary BD of the area AR. The player PL crossing the boundary BD of the area AR might hit one of the walls 301, 302, 303, and 304. This is unpreferable in terms of safety. The range of the area AR can be set in initial setting for the game apparatus, for example.

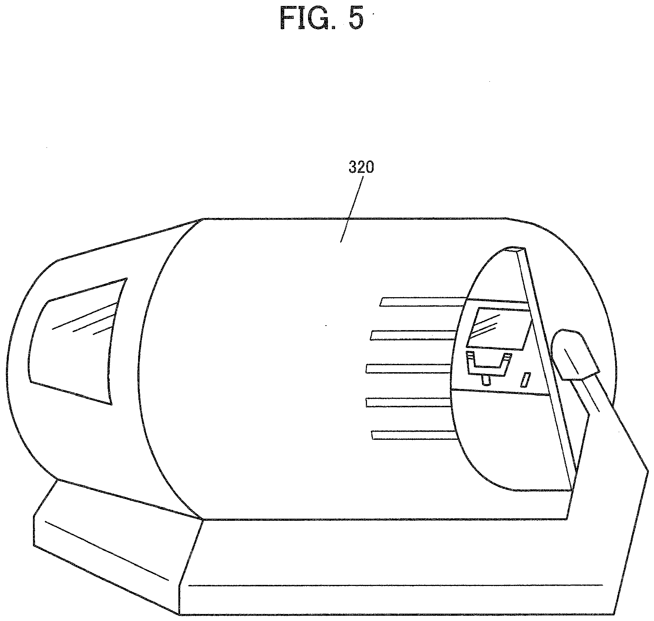

FIG. 5 illustrates an example of a housing 320 of the game apparatus. The game apparatus illustrated in FIG. 5 has a large housing 320 of the game apparatus. Thus, the player can enter the housing 320 of the game apparatus to play the game. For example, the housing 320 of the game apparatus accommodates various devices (operation devices), equipment, a seat (chair), and the like. The player enters the housing 320 of the game apparatus and wears the HMD 200 on his or her head to enjoy a game in a virtual reality (VR) world.

### 2.3 Game overview

Next, an overview of the game implemented with the method according to the present embodiment is described. The game implemented with the present embodiment is a music game that gives a realistic feeling of an actual live stage where the player becomes a vocalist in a band and then makes a vocal performance. The player can feel whole new excitement of singing in front of full audience, and also feel so high with the fans cheering at him or her. The HMD and a high power surround speaker give player a realistic feeling of singing on an actual live stage surrounded by all his or her fans.

The audiences surrounding the stage provide various interactive reactions such as big cheers in response to the vocal performance and stage actions of the player. The HMD gives the player a realistic feeling of actually standing on a live stage surrounded by a full audience including fans in the front row whose faces are visible to the player. On the stage, the player gives a live performance (singing) backed by the band members to fuel the excitement of the audiences.

The player makes a reservation and configures gameplay settings in a shared reception area. Then, the player can enjoy a virtual reality of performing live on stage in a room with cushioning materials for ensuring safety as illustrated in FIG. 4A and FIG. 4B.

The play setting by the player, before performing live, includes selecting a concert performance mode, and then selecting a setlist and a stage type. Then, the player wears the HMD 200 and holds the input devices 160-1 and 160-2 (wears the devices described above with reference to FIG. 2A and FIG. 2B). An operator in the facility gives instructions to the player, and helps the player wear and adjust the devices. The room space serving as the play area is calibrated (initialized) by the operator before the player enters.

The input device 160-1 in FIG. 2A serves as a microphone and a game controller. The arm or the hand of the player (virtual player) is not rendered in the VR space. Still, the position of the input device 160-1 held by the hand of the player is detected, so that a microphone image, rendered at the detected position, can move in accordance with the movement of the player.

The player adjusts the vocal key in a standby room, beneath the stage, in a VR space. In the VR space, the player stands on a large lift that is lifted when the live performance starts.

As the lift is lifted toward the stage, the cheering and shouting in the hall, heard from a distance, gradually get louder and more powerful, and make vivid variations. When the player finally appears on the stage, the player receives spot light that is backlight from the forward side, as well as huge cheering from the audiences at the peak of excitement due to the appearance of the player. The player inputs a starting action (a hand action for example) to start the music and transition to a live sequence.

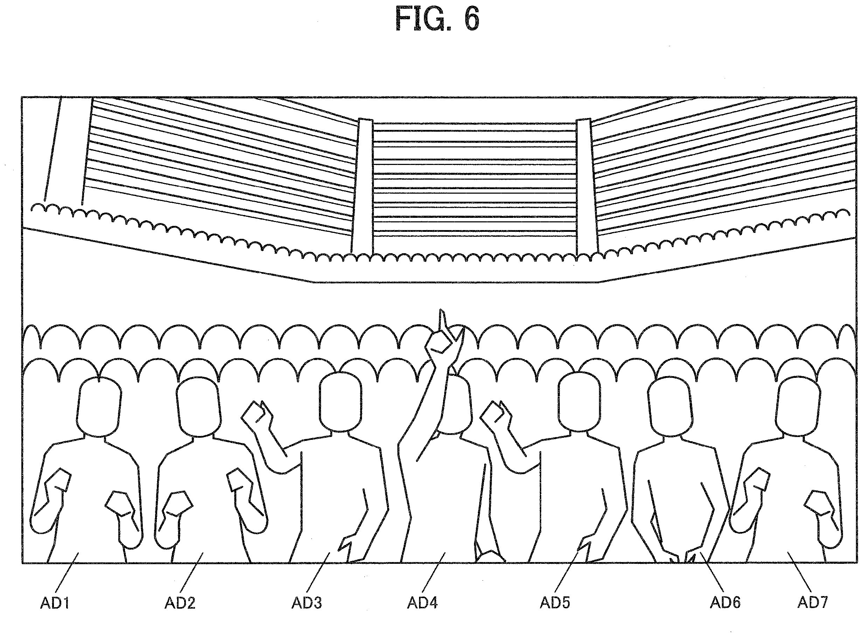

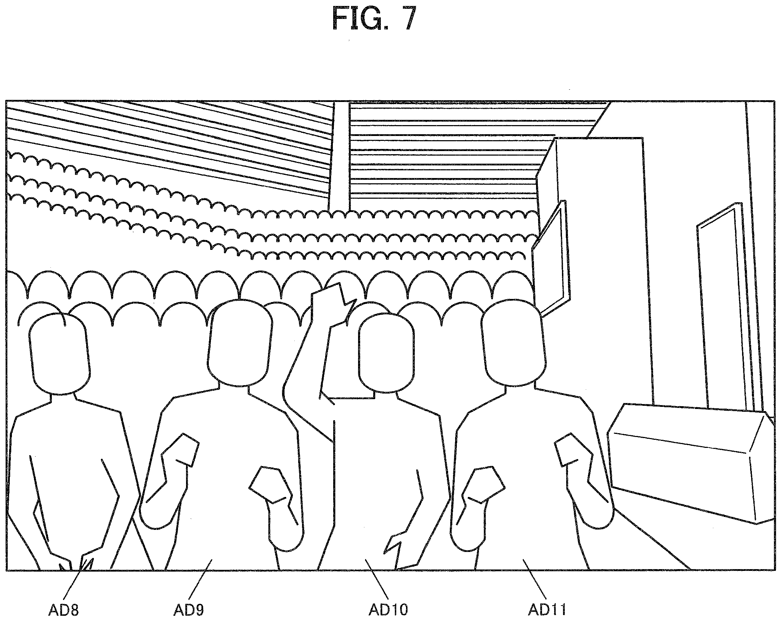

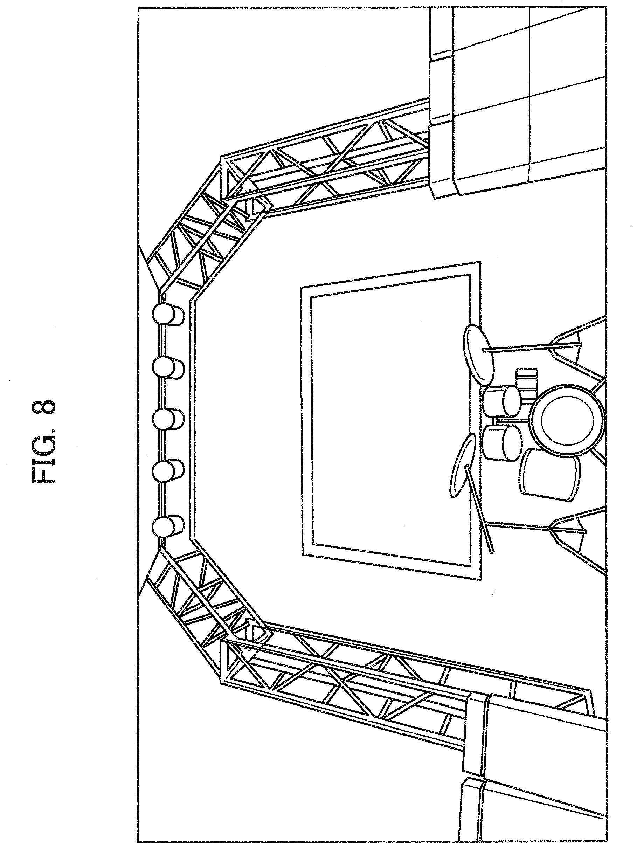

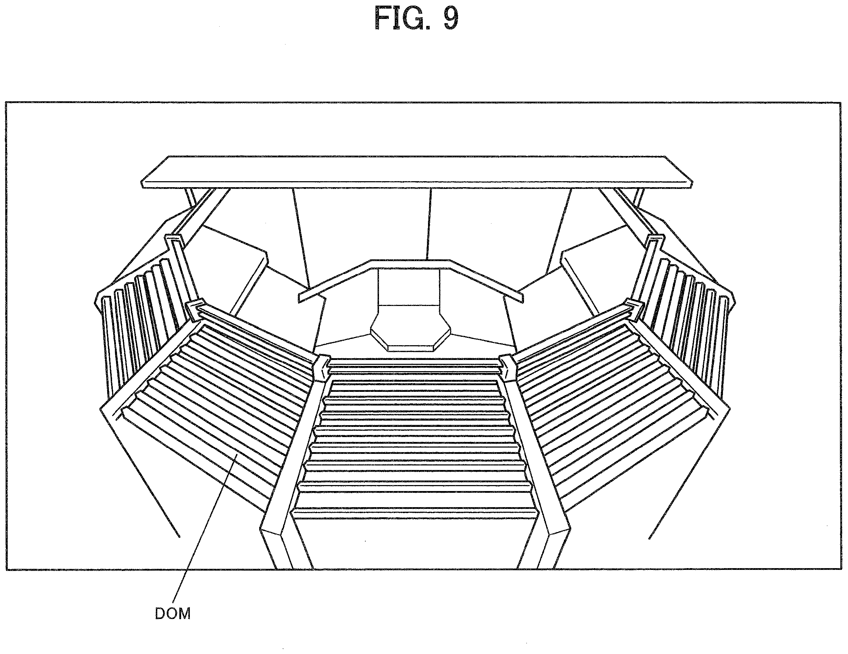

During the live performance, the player is free to sing emotionally on the stage. FIG. 6, FIG. 7, and FIG. 8 each illustrate an example of a game image (image in the VR space) displayed on the HMD 200 worn by the player on the stage. As illustrated in FIG. 6 and FIG. 7, the full audience is shown in front of the player. FIG. 6 illustrates a game image viewed by the player looking forward. FIG. 7 illustrates a game image viewed by the player who has turned right. FIG. 8 illustrates a game image, including a drum set, an amplifier, and a screen, viewed by the player turning back. As illustrated in FIG. 9, the live stage replicates a huge concert hall, in the real world, surrounded by a dome DOM. This concert hall in the VR space is visited by a large number of audiences that cheer at the peak 1 of excitement in response to the vocal performance by the player. A monitor at the foot of the player in the VR space displays lyrics and pitch. The player makes a vocal performance while watching the lyrics and pitch whenever necessary.

As illustrated in FIG. 6, FIG. 7, and FIG. 8, the game apparatus according to the present embodiment, using the HMD 200, invites the player to the world entirely surrounded by the VR space serving as the game space. For example, the game image illustrated in FIG. 6 is displayed on the HMD 200 for the player wearing the HMD 200 and looking forward. The game image illustrated in FIG. 7 is displayed for the player who has turned right. The game image illustrated in FIG. 8 is displayed for the player who has turned back. Thus, the player can enjoy the virtual reality as if he or she is giving a vocal performance in a huge concert hall full of audiences cheering at him or her. Thus, the game can make the player feel much more realistic than conventional game apparatuses.

In the present embodiment, the motion (action) and cheering of the audiences change in accordance with the intonation of the song, and in response to the action of the player. For example, in FIG. 6, audiences AD1 to AD7 close to the stage where the player stands are displayed as polygon model objects formed of multiple polygons. The same applies to audiences AD8 to AD11 in FIG. 7. Audiences at positions far from the stage are displayed as an image on a billboard polygon in the line of sight of the player.

For example, the motion of the polygon model audiences (AD1 to AD11) are expressed by motion playback based on motion data. The audiences make a basic action (basic motion) on the rhythm of a song. The excitement of the song is expressed with a level of the audience action that basically rises and drops depending on the intonation of the song, or may rise due to highly evaluated performance by the player.

The audience also interactively reacts to the voice and the movement of the player. For example, an action of the player such as "singing in a certain direction" or "waving hands" may raise excitement of the audience in the direction the player is facing. As a result, the basic action may become one step fancier, or an audience may make an unexpected and excited action unrelated to the rhythm of the song.

An evaluation process for the gameplay by the player on the stage includes two evaluation processes including: a first evaluation process for evaluating the performance for raising excitement for certain audiences, that is, for evaluating how much the certain audiences got excited; and a second evaluation process for evaluating how well the player has sung the song.

The first evaluation process is a main evaluation system based on feedback from the audience during the gameplay by the player. The target of the evaluation system is an audience that makes a certain appealing action to the player. In the example illustrated in FIG. 6, the target is the audience AD4 who is making an appealing action (raising his or her right hand to the sky) to the player. In the example illustrated in FIG. 7, the target is the audience AD10 making an appealing action. The target may be a group of a plurality of audiences. Thus, in the example illustrated in FIG. 7, the target may be the audiences AD3, AD4, and AD5.

A value of an excitement parameter (excitement gauge) of the audience making the appealing action increases when the player makes first and second actions to the audience as described later. When the excitement parameter reaches the maximum value, the audience makes an excited action expressing great joy. The excited action includes a fanatic action unrelated to the rhythm of the song.

The first action performed by the player for the appealing audience is an action of singing with his or her line of sight directed to the target audience. The first action is evaluated in a singing part of a song including a singing part and an instrumental part.

The second action performed by the player for the appealing audience is an action (motion) of raising an arm by the player in response to the yelling from the audience or an action of shouting in response to the yelling from the audience in the instrumental part.

The audiences to be the targets of the first and the second actions are randomly picked in the concert hall for example. The number of the targets during a single performance by the player is fixed to a predetermined number. A maximum evaluation value is given to the player who has successfully made the audience excited with the excitement parameter of all of the predetermined number of target audiences reached the maximum value (cleared the goal for all of the predetermined number of targets). For example, the number of target audiences may be 10. In such a case, when the excitement parameter of all of the 10 audiences reaches the maximum value, the player is evaluated to have cleared all of the targets. The type of the final stage effect changes in accordance with the number of cleared targets. For example, for the player has cleared the goal for all of the 10 targets, the fanciest final stage effect is provided. For example, the effect is fancier in a case where the player has cleared the goal for eight targets than in a case where the player has cleared the goal for five targets.

The second evaluation process is based on an evaluation system involving detection of the pitch and rhythm of a song sang by the player. The evaluation is based on aggregation of points not disclosed to the player. Specifically, whether or not the player has sung on rhythm is evaluated. For example, whenever the song sang by the player is synchronized with a timing designated based on a bass or drum play, the point increases. Furthermore, how well the player handles long tones, accuracy regarding rests, and the like are evaluated. Furthermore, the pitch accuracy is evaluated. Specifically, the pitch of the song sang by the player is evaluated, and correctly sang pitches are displayed in a form of a graph. When a state with zero volume from the player continues for a predetermined period of time, most of the audiences transition to a standby mode, during which the player can obtain no points.

When the performance by the player ends with a result of the player evaluation for the entire live performance reaching a certain level, the audiences request for an encore. The player can answer to the encore to perform another song. When the live performance ends, illumination darkens with cheering fading out, and the game ends when the display finally blacks out. Then, a message and a guide voice "Thank you for playing. Please take off the HMD" is displayed and output. Thus, the player takes off the devices and exits the room to end the gameplay.

### 2.4 First and second events

As described above, the game apparatus according to the present embodiment can make the player enjoy the virtual reality to feel as if he or she has actually performed live in front of excited audiences in an actual concert hall. As illustrated in FIG. 6 and FIG. 7, the audiences excited by the performance by the player are displayed in front of the player. Thus, some players might get too excited to actually move toward the audiences in the VR space.

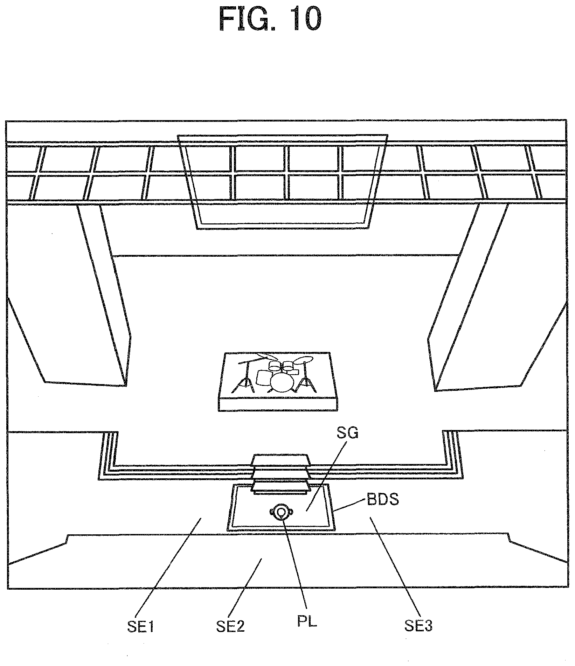

FIG. 10 illustrates an example of an elevated view of a stage SG where the player PL stands in the VR space. The player PL in FIG. 10 is actually a virtual player in the VR space, but is denoted with the same reference numeral PL as the player in the real world to simplify the description of the present embodiment.

The stage SG is defined by a boundary BDS, and audiences, making the actions as illustrated in FIG. 6 and FIG. 7, are arranged at audience seats SE1, SE2, and SE3 around the stage SG. The boundary BDS of the stage SG corresponds to the boundary BD of the area AR of the play area in the real world as illustrated in FIG. 4A for example. For example, the boundary BDS of the stage SG in the VR space is set to be at a position shifted inward from the boundary BD of the area AR in the real world, illustrated in FIG. 4A, by a predetermined distance.

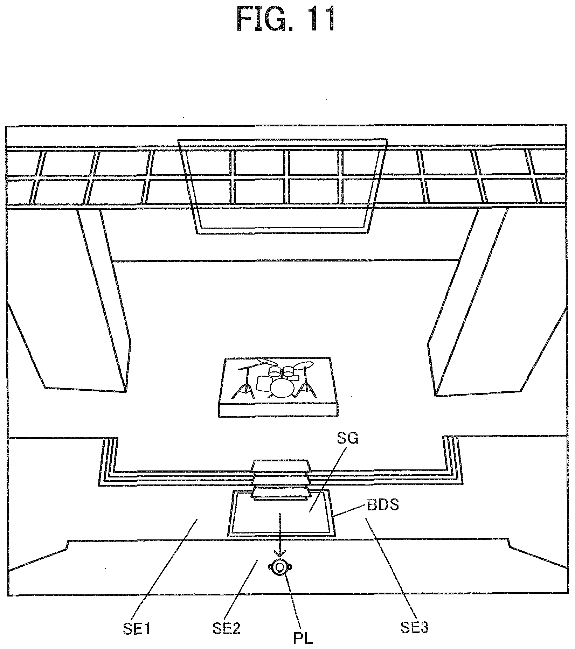

FIG. 10 illustrates the player PL standing on the stage SG to perform live while being surrounded by the audiences (AD1 to AD11) as illustrated in FIG. 6 and FIG. 7. Thus, the player PL might get too excited watching the audience get excited as illustrated in FIG. 6 to move out of the stage SG as illustrated in FIG. 11 toward the audiences.

This is unpreferable in terms of safety because the player PL might hit a wall 301 of the room or the like in the real world illustrated in FIG. 4A.

To prevent this, the present embodiment employs a method of causing the first and the second events for alerting purposes. Specifically, these two stage events can effectively reduce a risk of unwanted happening such as the player hitting the wall with the alerting having minimum possible negative impact on the immersion to the game.

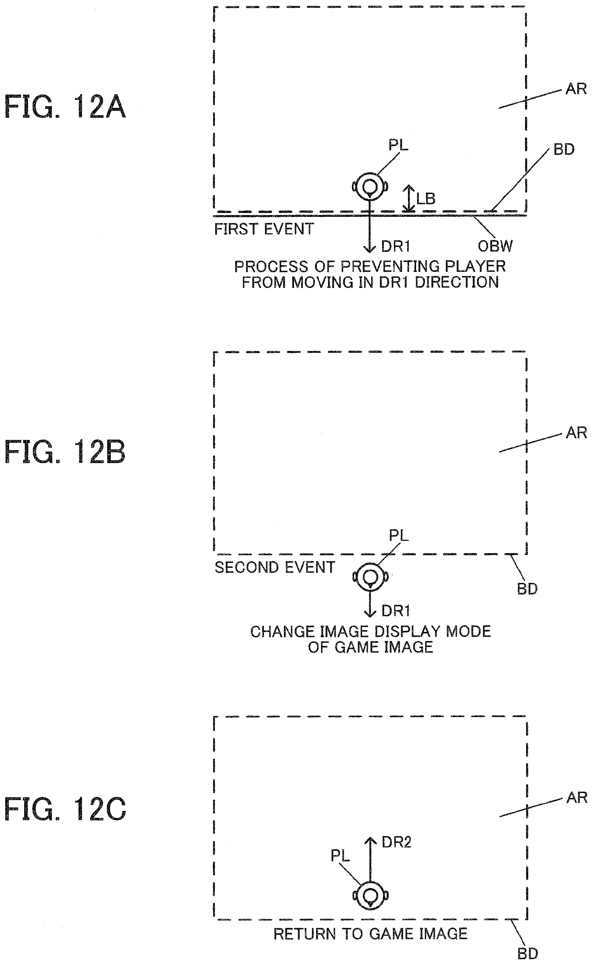

Specifically, in FIG. 12A, it is assumed that the player PL is detected to have approached (reached) the boundary BD of the area AR set to the play area (or in the housing of the game apparatus). For example, the player PL is determined to have approached the boundary BD when the position of the player PL is within a range of a distance LB from the boundary BD of the area AR. As a result, the first event occurs. In the first event, a process that prevents the player PL from moving in a DR1 direction (boundary direction) toward the boundary BD. For example, the movement of the player PL is suppressed (inhibited, stopped) so that the player PL does not move beyond the boundary BD. Thus, the player PL stops moving and stay where he or she is, move back in the backward direction, or moves in a left or right direction.

Specifically, a process of displaying an alerting object OBW at a position corresponding to the boundary BD of the area AR is performed as the preventing process in the first event. In FIG. 12A, the alerting object OBW is displayed at a position slightly on the outer side of the boundary BD. Alternatively, the alerting object OBW may be displayed at a position on the boundary BD or at a position slightly on the inner side of the boundary BD.

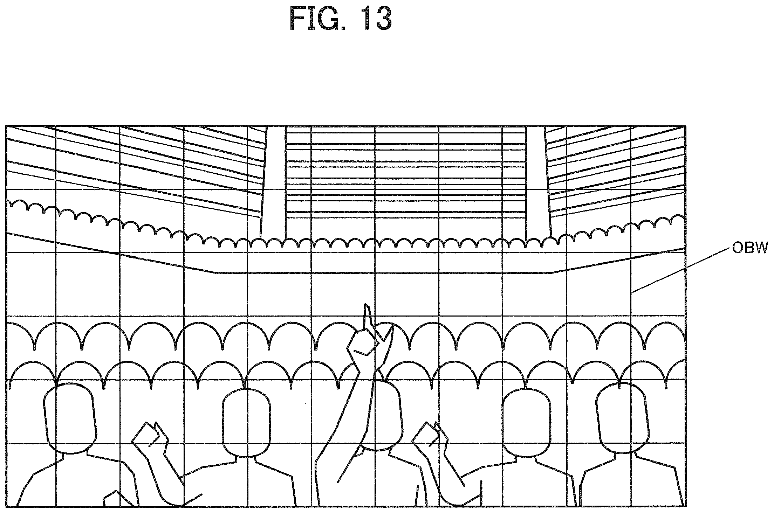

FIG. 13 illustrates an example of the alerting object OBW. The alerting object OBW illustrated in FIG. 13 is a wire frame wall object (net-like object). With such an alerting object OBW displayed, the player is expected to give up moving in the DR1 direction (boundary direction) in FIG. 12A, and to stop moving to stay where he or she is or to move in a direction opposite to the DR1 direction. The alerting object OBW has a net-like shape, and thus the player can still see the image of the audiences and the like, whereby the alerting can be issued with a minimum possible negative impact on the immersion to the game. Other example of the preventing process in the first event will be described later.

The wire frame wall (fence), displayed as illustrated in FIG. 13, conforms to and thus does not conflict with the theme of the music game as described above with reference to FIG. 6 to FIG. 8. Thus, the wire frame wall thus displayed imparts minimum possible mismatching impression to the player. In this manner, the alerting object displayed when the player approaches or reaches the boundary of the area preferably has a shape, a color, or a material conforming to the theme of the game. Such an alerting object conforming to the theme of the game may be displayed as is at a timing when the player approaches or reaches the boundary. To further reduce the mismatching impression imparted to the player, the alerting object may appear by gradually changing from transparent to opaque when the player approaches or reaches the boundary. Alternatively, when the player moves in a direction toward the original position, the alerting object may gradually change from opaque to transparent to finally disappear.

When the player is excited while performing live, the player might not stop moving in the DR1 direction despite the preventing process using the alerting object OBW as described above. Thus, in the present embodiment, the second event occurs when the player PL is detected to have moved beyond the boundary BD of the area AR as illustrated in FIG. 12B. In the second event, a process of changing an image display mode of the game image is performed. For example, the image quality of the game image is largely reduced or an image completely different from the game image is displayed. In the second event, a process of changing a game sound output mode may be performed. For example, a process of reducing the value of the game sound may be performed.

When the player PL is detected to be moving in a direction DR2 toward the inner side of the boundary BD of the area AR as illustrated in FIG. 12C after the second event has occurred, a process of restoring the displayed image to be the game image from the displayed image different from the game image. For example, the original image quality of the game image is restored, or the displayed image returns to the game image from the image completely different from the game image. Alternatively, a process of restoring the original game sound output mode may be performed. For example, the volume of the game sound is restored.

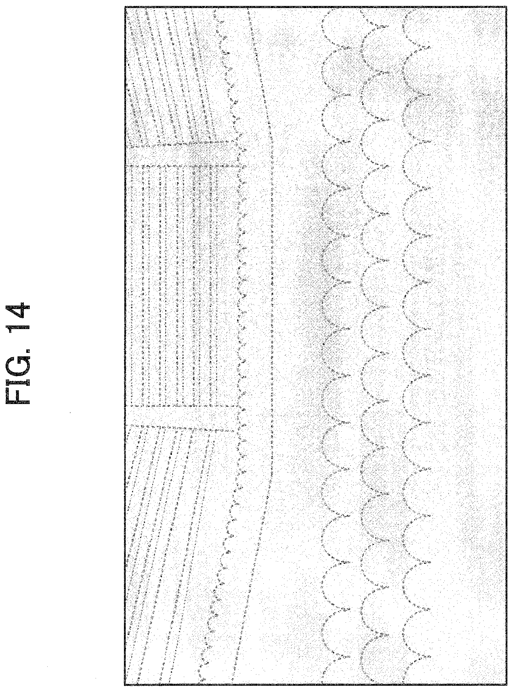

FIG. 14 illustrates an example of the game image with a reduced image quality. The game image illustrated in FIG. 14 is a result of performing a process of lowering the brightness, saturation, contrast, or resolution of the game image or a process of blurring the game image, leaving features (feature amounts) of the original game image (illustrated in FIG. 6 or the like). For example, an image dark as a whole including images of the audiences and the audience seats blurred is displayed. An alert may be further issued with a text image and sound inducing the player to return to the original position (FIG. 4A), while the image illustrated in FIG. 14 is being displayed.

The process of lowering the image quality of the game image as illustrated in FIG. 14 can be easily implemented by performing a known image processing on the game image that is a rendering image, for example. For example, a filter processing for lowering the brightness, the saturation, or the contrast of the original game image may be performed. Alternatively, a filter processing serving as blurring processing may be performed on the original image. Thus, the game image with a lowered image quality as illustrated in FIG. 14 can be generated. Furthermore, the game image as an RGB color image may be converted into a monochrome image or the like to be displayed.

For example, when an entirely blank image is displayed instead of the image as illustrated in FIG. 14, the player might lose his or her position or the direction he or she is facing. Specifically, the player, with his or her eyes covered by the HMD 200, loses his or her position or direction when any thing within his or her field of vision is white, due to the absence of a display object serving as a reference for the player to recognize his or her position and orientation.

In view of this, contours (feature amounts) of the display objects such as the audiences and the audience seats remain in the game image with a lowered image quality as illustrated in FIG. 14. Thus, these display objects can serve as the reference so that the player does not lose his or her position or orientation. In FIG. 14, the image quality is lowered but still, the game image is displayed, thus immersion of the player to the game is not largely compromised. The lowered image quality of the game image is expected to calm down the excited player.

When the player PL moves in the direction toward the original position as illustrated in FIG. 12C, the original image quality of the game is restored. Thus, the displayed image temporarily transitions to the game image with a lowered image quality as illustrated in FIG. 14, and then returns to the original high image quality image. This only has minimum possible impact on the immersion of the player to the game.

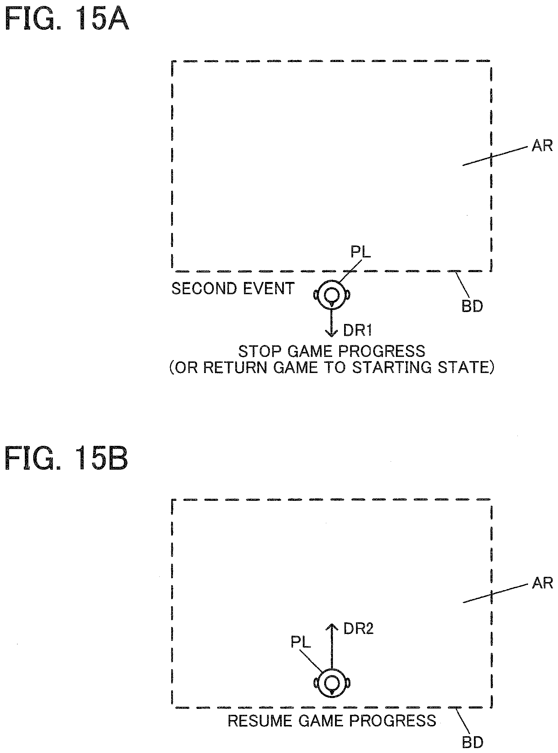

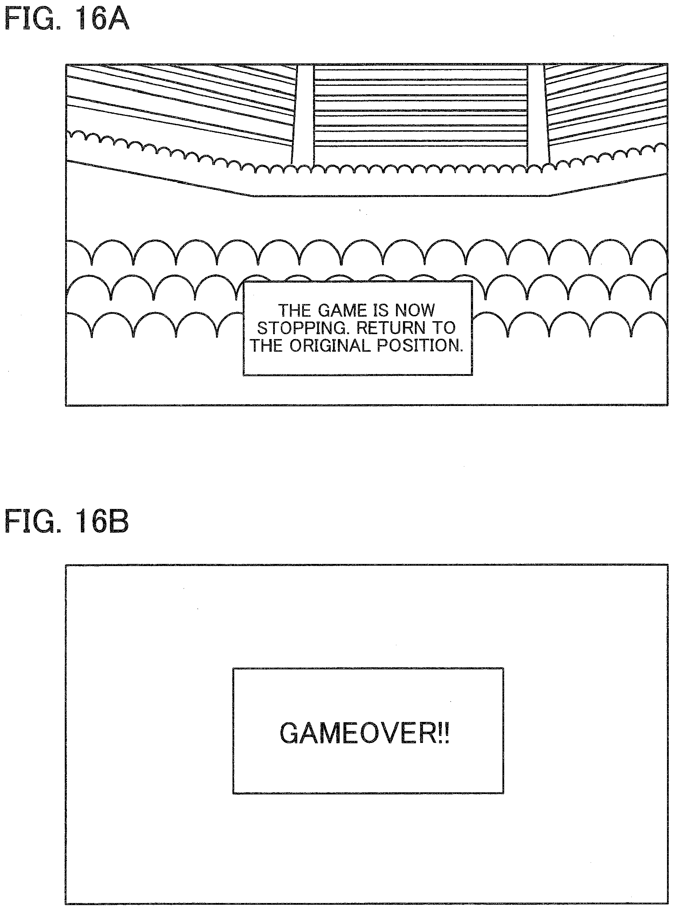

A process of changing the game progress mode may be performed when the second event occurs. FIG. 15A illustrates an example where a process of stopping the game progress is performed as the process of changing the game progress mode, because the player PL is detected to have moved beyond the boundary BD of the area AR. For example, the elapse of time in the game space is stopped, or a still image is displayed with the movie display of the game image paused. Alternatively, the elapse of time in the game space may be extremely slowed down, or the movie display of the game image may be extremely slowed down. Then, as illustrated in FIG. 16A, an image is displayed to notify the player that the game has stopped due to the occurrence of the second event. Specifically, a notification inducing the player to return to the original position is issued.

The process of changing the game progress mode may be a process of returning the game to a starting state. For example, the game returns to a state where the live performance starts, or returns to a state where the player stands by in the standby room.

When the player PL is detected to be moving in the direction DR2 toward the inner side of the boundary BD of the area AR as illustrated in FIG. 15B after the second event has occurred, a process of restoring the original game progress mode is performed. Specifically, the game progress that has been stopped is resumed. For example, the elapse of time in the game space or the movie display of the game image is resumed.

As a result, the game progress that has been temporarily stopped due to the movement beyond the boundary BD resumes when the player moves in the direction toward the original position as illustrated in FIG. 15B. Thus, the game progress that has been temporarily stopped resumes. This has no large negative impact on the gameplay by the player.

A process of terminating the game may be performed when the second event occurs. For example, an image as illustrated in FIG. 16B is displayed, and the game is completely terminated. It is preferable to not terminate the game in this way for the gameplay by the player. Still, there may be cases where the game should be terminated for ensuring safety.

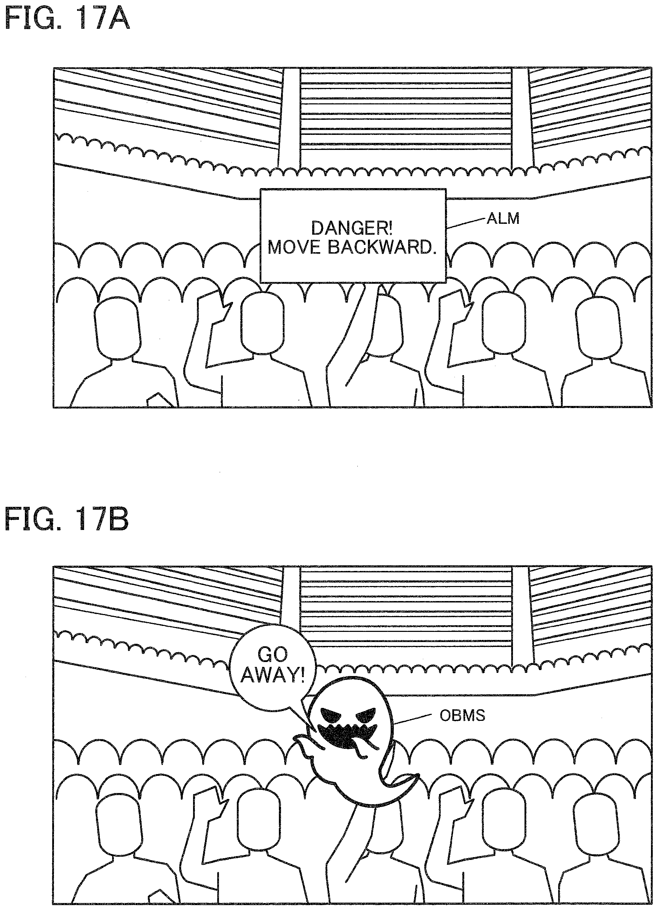

The player movement preventing process in the first event illustrated in FIG. 12A includes various possible processes. For example, a process of displaying warning information may be performed as the preventing process in the first event as illustrated in FIG. 17A. For example, the player is warned to move backward because the further movement in the current DR1 direction is dangerous in FIG. 12A. With this configuration, the player can visually recognize that the further movement in the DR1 direction is dangerous, whereby the further movement in the DR1 direction can be effectively prevented. The warning display may be assisted by a warning sound output.

As illustrated in FIG. 17B, a process of making an object appear in a direction toward the boundary BD may be performed, as illustrated in FIG. 17B, as a preventing process in the first event. For example, in FIG. 17B, a monster object OBMS is displayed in front of the player, together with a balloon including a message "go away!". The monster may make an attacking action on the player if necessary. With the monster object OBMS thus displayed, the player stops moving in the DR1 direction in FIG. 12A to avoid the monster. For example, the player stops moving to stay where he or she is, or move in a direction different from the DR1 direction. Thus, an event that makes the player hesitate from moving in a dangerous direction can be caused. All things considered, an effective preventing process in the first event can be implemented.

A process of changing the display mode (image information such as a color or a texture or shape information) of the object in the direction toward the boundary may be performed as the preventing process in the first event. For example, the expression or the color of the face of the audience (an object in a broad sense) toward which the player is moving may gradually become confused or turn pale, so that the player can be notified of the danger. In this manner, the display mode of the object such as the audience in the boundary direction is changed to a display mode that prevents the further movement in the boundary direction.

A process of making a notable object or a notable event for the player appear or occur in a direction different from the direction DR1 toward the boundary BD may be performed as the preventing process in the first event. For example, an important notable object (such as an important item for example) in the game is displayed in a direction (the backward direction, the left direction, or the right direction for example) instead of being displayed in the direction DR1 in FIG. 12A. Alternatively, in an RPG or the like, an event such as dead-ending the direction DR1 and opening a way for getting out of a maze or the like in a direction different from the direction DR1 may occur. Thus, an effective preventing process in the first event can be implemented.

In the present embodiment described above, the first event occurs when the player is detected to have approached or reached the boundary of the area set as a movable range of the player. In the first event, a process that prevents (inhibits) the movement of the player in a direction toward the boundary is performed. When a movement of the player beyond the boundary of the area is detected, the second event occurs. In this second event, the process of changing the image display mode of the game image, the process of changing the game progress mode, the process of terminating the game, or the like is performed. Thus, in the first event, the movement in the boundary direction can be prevented while giving only a slight unnatural impression to the player. Thus, when the play area in the real world or the housing of the game apparatus includes an obstacle in a direction corresponding to the boundary direction, the player can more naturally avoid danger or the like. In the present embodiment, the second event occurs when the player moves in the boundary direction after the first event has occurred to perform the process that prevents the movement of the player in the boundary direction. In the second event, the process of changing the image display mode of the game image, the process of changing the game progress mode, the process of terminating the game, or the like is performed. Thus, the player can more effectively avoid the danger or the like than with the preventing process in the first event. As a result, a game apparatus that can implement more appropriate alerting in a game using a head-mounted display device can be provided.

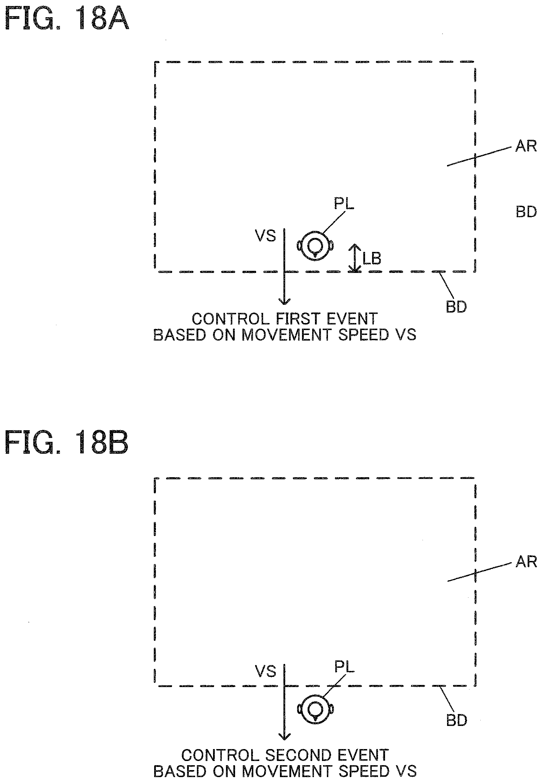

In the present embodiment, as illustrated in FIG. 18A, a movement speed VS of the player PL may be detected, and the first event may be controlled based on the movement speed VS. For example, the preventing process in the first event is controlled based on the movement speed VS of the player PL. For example, the first event occurs at an earlier timing for a faster movement speed VS of the player PL. For example, in FIG. 18A, the first event occurs to perform the preventing process described above, when the player PL is positioned within a range of the distance LB from the boundary BD. In this configuration, the distance LB is set to be longer for a faster movement speed VS of the player PL than for a slower movement speed VS. For example, if the movement speed VS of the player PL is fast, the alerting using the alerting object OBW in the first event as illustrated in FIG. 13 might be too late. This can be prevented with the distance LB in FIG. 18A set to be longer for a faster movement speed VS for example.

In the present embodiment, the second event may be controlled based on the movement speed VS of the player PL as illustrated in FIG. 18B. For example, the process of changing the image display mode of the game image in the second event is controlled based on the movement speed VS of the player PL. For example, the image display mode of the game image is changed at an earlier timing for a faster movement speed VS of the player. For example, as illustrated in FIG. 14, the game image with a lowered image quality or an image completely different from the game image is displayed at an earlier timing. Alternatively, the process of changing the game progress mode or the process of terminating the game in the second event is controlled based on the movement speed VS of the player PL. For example, the game progress is stopped or the game is terminated at an earlier timing for a faster movement speed VS of the player. With this configuration, the player PL can be more effectively prevented from hitting the wall or the like. The process of changing the output mode of the game sound in the second event may be controlled based on the movement speed VS of the player PL. For example, the process of lowering the volume of the game sound or the like may be performed at an earlier timing for a faster movement speed VS of the player.

In the present embodiment, the process of vibrating the vibration device 164 or the process of outputting a warning sound may be performed in the first event or the second event.

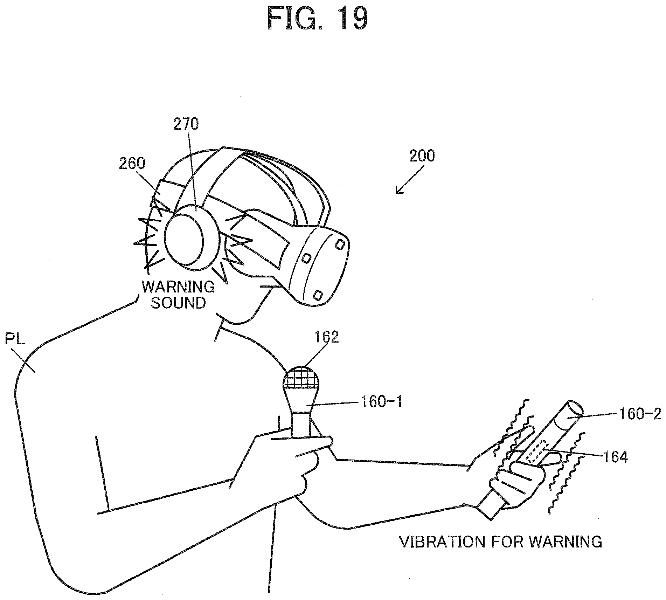

For example, when the player PL is detected to have approached (or reached) the boundary BD of the area AR as illustrated in FIG. 12A, the vibration device 164, provided to the input device 160-2, may be vibrated for warning as illustrated in FIG. 19, for example. For example, a warning sound may be output using the headphone 270. Thus, the player PL can be more effectively prevented from moving in the DR1 direction that is the boundary direction.

Alternatively, when the player PL is detected to have moved beyond the boundary BD of the area AR as illustrated in FIG. 12B, the vibration device 164, provided to the input device 160-2, may be vibrated for warning or the warning sound may be output using the headphone 270 as illustrated in FIG. 19, for example. Thus, the alerting process can be more effectively performed for the player PL in the second event.

### 2.5 first and second game processes

Next, a game process according to the present embodiment suitable for the game described above with reference to FIG. 6 to FIG. 8 is described. The present embodiment employs a method of evaluating the game result of the player based on result of two game processes including: a first game process using input information input to the input device 160; and a second game process using line of sight information.

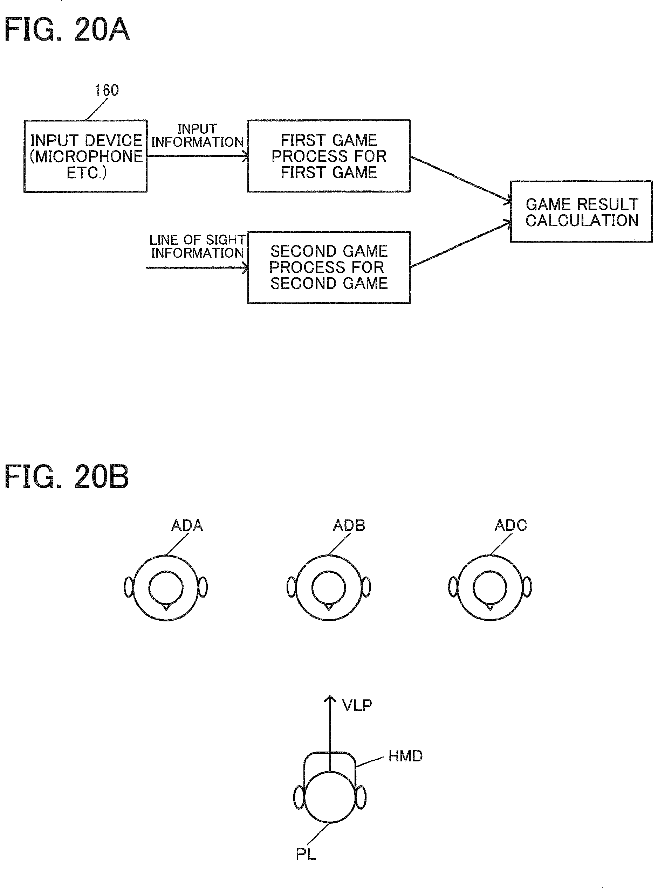

Specifically, in the present embodiment, as illustrated in FIG. 20A, the line of sight information on the player wearing the HMD 200 and the input information input by the player using the input device 160 are acquired. For example, the input process section 102 in FIG. 1 acquires the line of sight information and the input information input to the input device 160. The ling of sight information is information indicating the line of sight direction or the like of the player, and can be acquired through the tracking process and the like described above. For example, the line of sight information on the player can be determined by obtaining the direction information or the like on the HMD 200 by the tracking process. The input information input to the input device 160 is musical performance information (singing or playing a musical instrument) input through a performance by the player for example.

In the present embodiment, as illustrated in FIG. 20A, the first game process, for the player to play the first game, is performed based on the input information (for example, information on voice detected by a microphone) input through the input device 160. The second game process, for the player to play the second game, is performed based on the line of sight information indicating the line of sight direction of the player. The game result of the player is calculated based on results of the first and the second game processes. For example, an overall game result (comprehensive or final game result) of the player is calculated based on a result of evaluating the gameplay by the player in the first and the second game processes.

In this case, the first game is a music game the game process for which is performed based on the musical performance information on the player serving as the input information for example. For example, the musical performance information serving as the input information for the music game involving the player singing is voice information on the singing by the player. The musical performance information serving as the input information for the music game involving the player playing a musical instrument is sound-of-musical instrument information generated by the musical instrument (or a device replicating the musical instrument) played by the player.

The second game is a game the game process for which is performed based on line of sight relationship information indicating relationship between the line of sight of the player and the target. For example, in the second game, the gameplay by the player is evaluated based on whether or not the target is in the line of sight (line of sight direction) of the player. Specifically, the game process for the second game is performed based on the line of sight relationship information indicating the relationship between the line of sight of the player and an audience serving as the target.

For example, in FIG. 20B, the target is an audience ADB which is one of audiences ADA, ADB, and ADC. In this case, the game process is performed and the gameplay by the player are evaluated based on the line of sight relationship information indicating relationship between the line of sight VLP of the player PL wearing the HMD and the audience ADB serving as the target. Specifically, the gameplay by the player is highly evaluated when the line of sight VLP of the player PL is directed to the audience ADB.

For example, in the game described above with reference to FIG. 6, the audience AD4 making an appealing action to the player serves as the target to be in the line of sight of the player. When the player sings with the line of sight directed to the audience AD4 serving as the target, the gameplay by the player is highly evaluated.

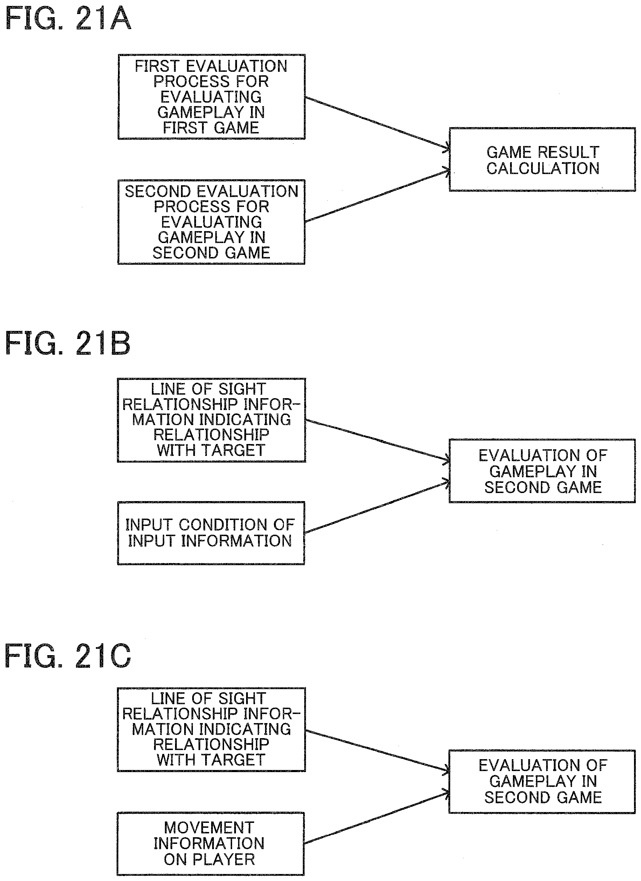

In the present embodiment, as illustrated in FIG. 21A, a first evaluation process for evaluating the gameplay by the player in the first game and a second evaluation process for evaluating the gameplay by the player in the second game are performed. The game result of the player (a comprehensive or final game result for example) is calculated based on results of the first and the second evaluation processes.

Specifically, the first evaluation process is performed for evaluating the gameplay by the player in the first game the game process for which is performed based on the input information such as the musical performance information input through the input device 160. For example, an evaluation process is performed for a musical performance by the player in the first game that is a music game.

The second evaluation process is performed for evaluating the gameplay by the player in the second game the game process for which is performed based on the line of sight information on the player. For example, as illustrated in FIG. 20B, the player PL plays the second game bringing the audience ADB serving as the target into the line of sight VLP, and the second evaluation process is performed for evaluating the gameplay. For example, the gameplay by the player performing a vocal performance with the line of sight directed to the audience ADB is highly evaluated in the second evaluation process.

The game result of the player is calculated based on results of the first and the second evaluation processes described above. For example, the final game result (point, score, or the like) of the player is calculated based on comprehensive determination on the results of the first and the second evaluation processes.

More specifically, as illustrated in FIG. 21B, the gameplay by the player in the second game is evaluated in the second evaluation process, based on the line of sight relationship information indicating the relationship between the line of sight of the player and the target and an input condition of the input information of the player in the first game.

For example, in FIG. 20B, when the musical performance information serving as the input information from the player is input with the line of sight VLP of the player PL directed to the audience ADB serving as the target, the gameplay by the player in the second game is highly evaluated. For example, the gameplay by the player in the second game is highly evaluated when the player PL is determined to be singing with the line of sight VLP directed to the audience ADB.

As illustrated in FIG. 21C, in the second evaluation process, the gameplay by the player in the second game may be evaluated based on the line of sight relationship information indicating the relationship between the line of sight of the player and the target and movement information on the player.

For example, in FIG. 20B, when a predetermined operation (action) of the player is detected with the motion information with the line of sight VLP of the player PL directed to the audience ADB serving as the target, the gameplay by the player in the second game is highly evaluated. For example, when the player PL is determined to be performing a predetermined operation with the line of sight VLP directed to the audience ADB, the gameplay by the player in the second game is highly evaluated. Specifically, when the player PL is determined to be performing the predetermined operation, such as raising an arm, in accordance with the cheering or the movement of the audience ADB, the gameplay by the player in the second game is highly evaluated. The motion information on the player PL can be acquired by detecting the position and the orientation of the input device 160 (160-1 or 160-2) in FIG. 2A for example.

In the present embodiment, a process of changing a value of a parameter set to the target of the line of sight of the player is performed, based on a result of the gameplay by the player in the second game. A result of the second evaluation process is obtained based on at least one of the value of the parameter and the number of targets the parameter of which has reached a given value.

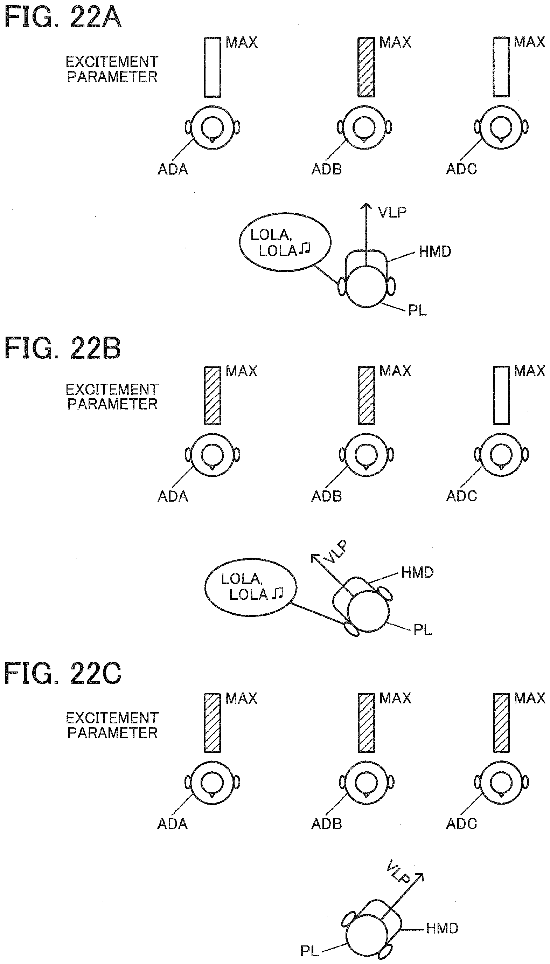

For example, in FIG. 22A, the value of the excitement parameter of the target of the line of sight VLP of the player PL is changed based on the result of the gameplay by the player PL in the second game. Specifically, in FIG. 22A, the player PL is making a vocal performance with the line of sight VLP directed to the audience ADB, whereby the excitement parameter of the audience ADB is increased. The target (audience ADB) is cleared, when the excitement parameter of the audience ADB reaches the maximum value (a given value in a broad sense).

In FIG. 22B, the player PL is making a vocal performance with the line of sight VLP directed to the audience ADA, and thus the excitement parameter of the audience ADA is increased. Another target (audience ADA) is also cleared when the excitement parameter of the audience ADA reaches the maximum value.

In FIG. 22C, the player PL is making a vocal performance with the line of sight VLP directed to the audience ADC, and thus the excitement parameter of the audience ADC is increased. Another target (audience ADC) is also cleared when the excitement parameter of the audience ADC reaches the maximum value.

When the all the targets (audiences ADA, ADB, and ADC) are cleared (with the parameter reaching the maximum value), the player PL is provided with the highest evaluation (evaluation point). When two of the targets are cleared, the player PL is provided with a lower evaluation than in the case where all the targets are cleared. Similarly, when one of the targets is cleared, the player PL is provided with a lower evaluation than in the case where the two targets are cleared.

As described above, in FIG. 22A to FIG. 22C, the result of the second evaluation process is obtained for the player based on the number of targets the excitement parameter (a parameter in a broad sense) of which has reached the maximum value (given value). The result of the second evaluation process may be obtained based on the value of the parameter of the target (audience), instead of using the number of targets the parameters of which have reached the maximum value (given value).

In the first evaluation process illustrated in FIG. 21A, the gameplay by the player in the first game is evaluated based on at least one of the pitch and the rhythm identified based on the musical performance information on the player serving as the input information. For example, the gameplay by the player in the first game may be evaluated as in a karaoke scoring game.

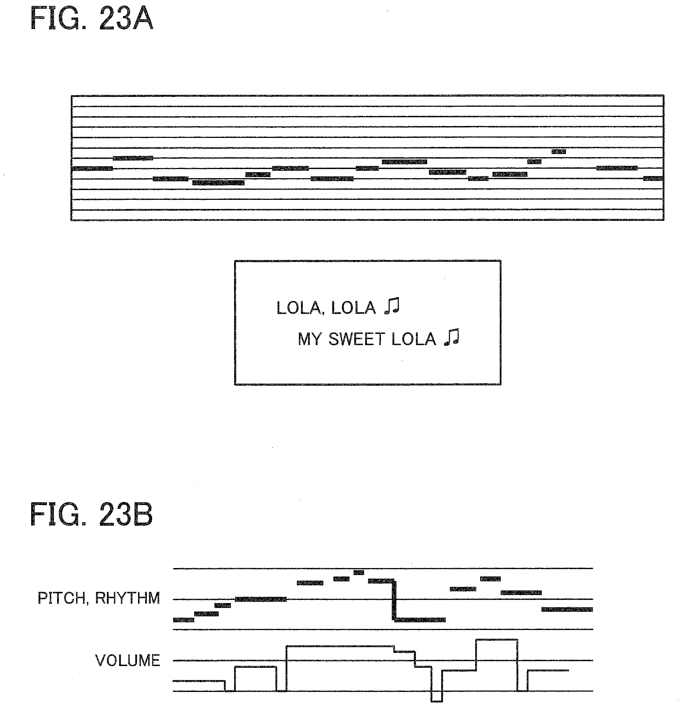

For example, in the game described above with reference to FIG. 6 to FIG. 8, an image including lyrics and pitches of a song is displayed to the player, as illustrated in FIG. 23A. The pitches are displayed for that the player can visually recognize reference (correct) pitches for the evaluation process. The pitches displayed further enables the player to recognize a reference (correct) rhythm for the evaluation process.

When the player makes a vocal performance, a comparison process using reference data on the pitch and the rhythm as illustrated in FIG. 23B is performed. Specifically, a process of extracting data on the pitch and rhythm of the singing by the player is performed from the musical performance information on the vocal performance by the player. Then, the process of comparing the data on the pitch and the rhythm of the player extracted and the reference data on the pitch and the rhythm is performed to evaluate the gameplay (vocal performance) by the player in the first game (music game). Thus, the how well the player has sung can be appropriately evaluated. Reference data on the volume may be prepared in addition to the reference data on the pitch and the rhythm, as illustrated in FIG. 23B, so that how well the player has controlled the volume of his or her vocal performance (intonation) can be evaluated.

### 2.6 Process example

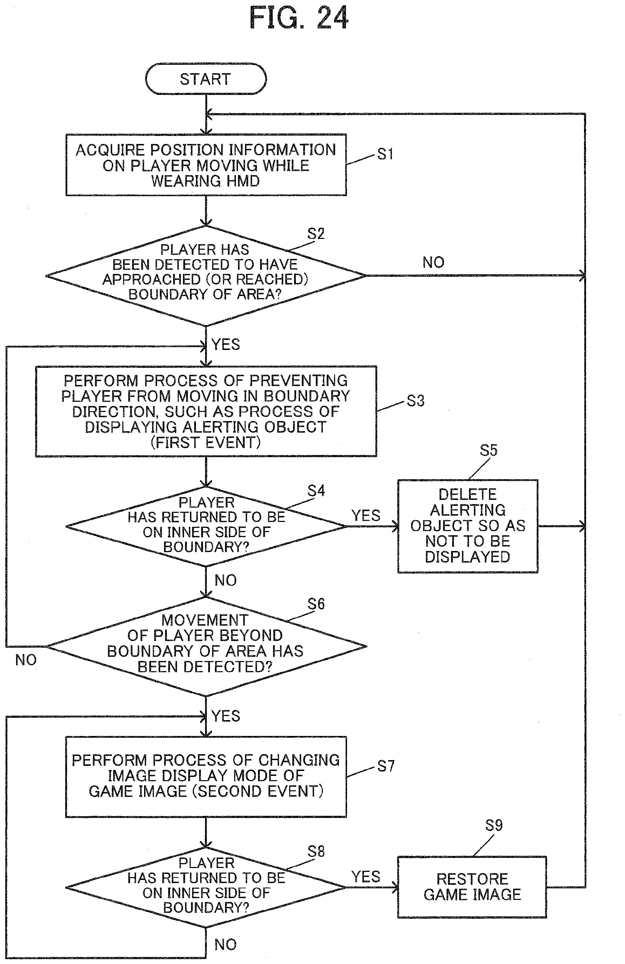

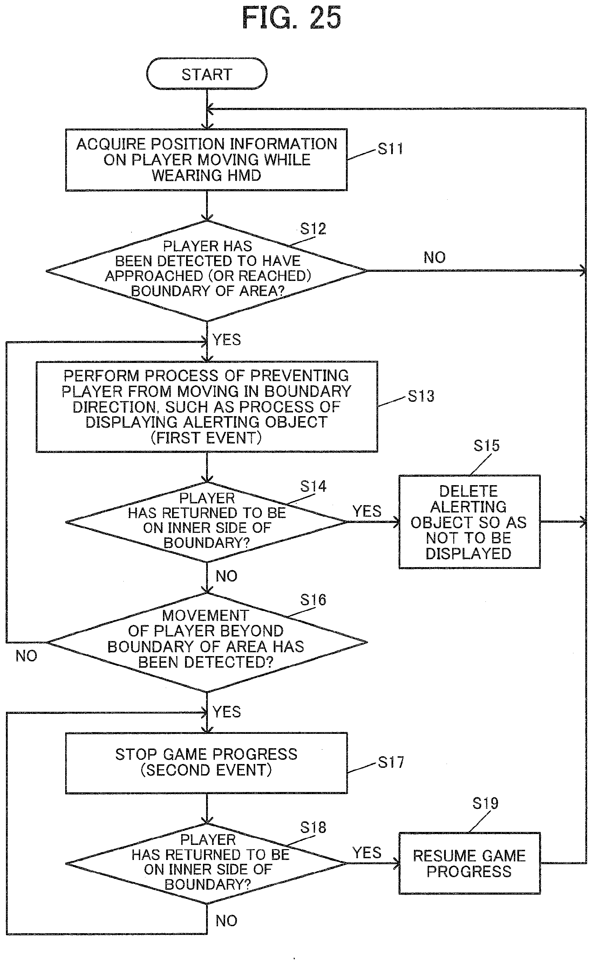

Next, an example of a process according to the present embodiment is described with reference to flowcharts in FIG. 24 and FIG. 25.

FIG. 24 is a flowchart illustrating the process of changing the image display mode of the game image, performed when the second event occurs.

First of all, position information on a player moving while wearing an HMD is acquired (step S1). The position information can be acquired through the tracking process described above or the like. Then, whether or not the player has been detected to have approached (or reached) the boundary of the area is determined based on the position information thus acquired (step S2). When the player has been detected to have approached (or reached) the boundary, the process that prevents the player from moving in the boundary direction, such as a process of displaying an alerting object, is performed (step S3). Specifically, the process in the first event, described above with reference to FIG. 12A and FIG. 13, is performed.

Next, whether or not the player has returned to be on the inner side of the boundary is determined (step S4). When the player has returned, the alerting object is deleted so as not to be displayed (step S5).

Next, whether or not the movement of the player beyond the boundary of the area has been detected is determined (step S6). When the movement beyond the boundary has been detected, the process of changing the image display mode of the game image is performed (step S7). Specifically, the process in the second event, described above with reference to FIG. 12B and FIG. 14, is performed.

Next, whether or not the player has returned to be on the inner side of the boundary is determined (step S8). When the player has returned, the process of restoring the game image is performed (step S9). Specifically, the process described above with reference to FIG. 12C is performed.

FIG. 25 is a flowchart illustrating the process of changing the game progress mode performed when the second event occurs. Processes in steps S11 to S15 in FIG. 25 are respectively the same as the processes in steps S1 to S5 in FIG. 24, and the detail description thereof will be omitted.

When the movement of the player beyond the boundary of the area is detected in step S16 in FIG. 25, the process of stopping the game progress is performed (step S17). Specifically, the process in the second event described above with reference to FIG. 15A and 16A is performed.

Next, whether or not the player has returned to be on the inner side of the boundary is determined (step S18). When the player has returned, the process of resuming the game progress is performed (step S19). Specifically, the process described above with reference to FIG. 15B is performed.

Although the present embodiment has been described in detail above, those skilled in the art will readily appreciate that many modifications are possible in the embodiment without materially departing from the novel teachings and advantages of this invention. Accordingly, all such modifications are intended to be included within the scope of the present invention. For example, each the terms that are at least once written together with a term of a wider sense or an alternative term in the specification or the figures can be replaced with the alternative term at any part of the specification or the figures. The processes of acquiring the position information and the line of sight information, the game process, the process of causing an event, the process that prevents movement in the boundary direction, the process of changing the image display mode of the game image, the process of changing the game progress mode, the display process, and the like are not limited to those described in the present embodiment. The scope of the present invention includes methods and processes equivalent to these. The present invention can be applied to various games. The present invention can be applied to various game apparatuses including an arcade game apparatus, a consumer game apparatus, a large attraction system where multiple player plays the game, a simulator, a multimedia terminal, a system board that generates a game image, a mobile phone, and the like. For example, the game apparatus may be a mobile phone in which a program for the game is installed and executed or a portable information terminal.

### [REFERENCE SIGNS LIST]

PL player, AR area, BD boundary, OBW alerting object,
100 process section, 102 input process section, 110 calculation process section,
111 game process section,
112 game progress process section, 113 evaluation process section, 114 character process section,
115 parameter process section, 116 object space setting section,
117 virtual camera control section, 118 game result calculation section, 120 display process section,
130 sound process section, 150 image capturing section, 151, 152 camera,
160 (160-1, 160-2) input device, 161 musical performance information input device,
162 microphone, 170 storage section, 172 space information storage section,
174 song information storage section, 176 parameter storage section,
178 rendering buffer, 180 information storage medium,
192 sound output section, 194 I/F section, 195 portable information storage medium,
196 communication section, 200 HMD (head-mounted display device),
201 to 203 light receiving element, 210 sensor section,
220 display section, 231 to 236 light emitting element, 240 process section,
260 headband, 270 headphone,
280, 284 base station,
281, 282, 285, 286 light emitting element,
301 to 304 wall, 306 door, 307, 308 ventilation device,
310, 312 wheel, 320 housing of game apparatus

## Claims

1. A game apparatus comprising:
an input process section (102) acquiring position information on a player wearing a head-mounted display device (200) and moving in a play area in a real world or a housing of the game apparatus;
a game process section (100) performing a process for a game played by the player in a virtual game space in which a plurality of objects are arranged; and
a display process section (120) performing a process of displaying a game image as viewed from a given viewpoint in the game space on the head-mounted display device,
the game process section
causing, when the player is detected to have approached or reached a boundary of an area set as a movable range of the player in the play area or the housing of the game apparatus, a first event for performing a preventing process that prevents the player from moving in a direction toward the boundary, the game process section controlling the preventing process in the first event based on movement speed of the player,
causing, when the player is detected to have moved beyond the boundary of the area, a second event for performing at least one of a process of changing an image display mode of the game image, a process of changing a game progress mode, and a process of terminating the game, and
wherein, as the preventing process in the first event, the game process section performs a process of displaying an alerting object at a position corresponding to the boundary of the area, a process of displaying warning information, a process of making a given object appear in the direction toward the boundary, a process of changing a display mode of the given object in the direction toward the boundary, or a process of making a notable object or a notable event for the player appear or occur in a direction different from the direction toward the boundary.

2. The game apparatus as defined in claim 1,
the game process section performing a process of lowering an image quality of the game image as the process of changing the image display mode of the game image.

3. The game apparatus as defined in claim 2,
the game process section performing a process of lowering brightness, saturation, contrast, or resolution of the game image, a process of changing a color image that is the game image to a monochrome image, or a process of blurring the game image as the process of lowering the image quality of the game image.

4. The game apparatus as defined in any one of claims 1 to 3,
the game process section performing a process of stopping a game progress as the process of changing the game progress mode.

5. The game apparatus as defined in any one of claims 1 to 4,
the game process section performing, when the player is detected to have returned to be on an inner side of the boundary of the area after the second event has occurred, a process of restoring the image display mode of the game image, or a process of restoring the game progress mode.

6. The game apparatus as defined in any one of claims 1 to 5,
the game process section controlling the process of changing the image display mode of the game image, the process of changing the game progress mode, or the process of terminating the game, in the second event, based on movement speed of the player.

7. The game apparatus as defined in any one of claims 1 to 6,
the game process section performing a process of vibrating a vibration device or a process of outputting a warning sound in the first event or the second event.

8. The game apparatus as defined in any one of claims 1 to 7,
the display process section performing a process of displaying the game image including an image of an audience at a location on an outer side of the area on the head-mounted display device.

9. The game apparatus as defined in any preceding claim,
the game process section controlling, in a case where the first event occurs upon approaching the boundary of the area, a determining distance for determining that the player has approached the boundary based on the movement speed of the player

10. The game apparatus as defined in any preceding claim,
the game process section controlling an occurrence timing of the first event based on the movement speed of the player

11. A process method comprising:
an input process of acquiring position information on a player wearing a head-mounted display device and moving in a play area in a real world or a housing of a game apparatus;
a game process of performing a process for a game played by the player in a virtual game space in which a plurality of objects are arranged; and
a display process of performing a process of displaying a game image as viewed from a given viewpoint in the game space on the head-mounted display device,
the game process including:
causing, when the player is detected to have approached or reached a boundary of an area set as a movable range of the player in the play area or the housing of the game apparatus, a first event for performing a preventing process that prevents the player from moving in a direction toward the boundary, the game process section controlling the preventing process in the first event based on movement speed of the player
causing, when the player is detected to have moved beyond the boundary of the area, a second event for performing at least one of a process of changing an image display mode of the game image, a process of changing a game progress mode, and a process of terminating the game,
wherein, as the preventing process in the first event, the game process section performs a process of displaying an alerting object at a position corresponding to the boundary of the area, a process of displaying warning information, a process of making a given object appear in the direction toward the boundary, a process of changing a display mode of the given object in the direction toward the boundary, or a process of making a notable object or a notable event for the player appear or occur in a direction different from the direction toward the boundary.

12. A process method according to claim 11, comprising:
the game process including performing a process of lowering brightness, saturation, contrast, or resolution of the game image, a process of changing a color image that is the game image to a monochrome image, or a process of blurring the game image when the player is detected to have approached or reached a boundary of an area set as a movable range of the player in the play area or the housing of the game apparatus or when the player is detected to have moved beyond the boundary.

13. A computer-readable storage medium storing therein a program comprising instructions which, when executed by a computer, cause the computer to function as:
an input process section acquiring position information on a player wearing a head-mounted display device and moving in a play area in a real world or a housing of a game apparatus;
a game process section performing a process for a game played by the player in a virtual game space in which a plurality of objects are arranged; and
a display process section performing a process of displaying a game image as viewed from a given viewpoint in the game space on the head-mounted display device,
the game process section
causing, when the player is detected to have approached or reached a boundary of an area set as a movable range of the player in the play area or the housing of the game apparatus, a first event for performing a preventing process that prevents the player from moving in a direction toward the boundary, the game process section controlling the preventing process in the first event based on movement speed of the player
causing, when the player is detected to have moved beyond the boundary of the area, a second event for performing at least one of a process of changing an image display mode of the game image, a process of changing a game progress mode, and a process of terminating the game,
wherein, as the preventing process in the first event, the game process section performs a process of displaying an alerting object at a position corresponding to the boundary of the area, a process of displaying warning information, a process of making a given object appear in the direction toward the boundary, a process of changing a display mode of the given object in the direction toward the boundary, or a process of making a notable object or a notable event for the player appear or occur in a direction different from the direction toward the boundary.

14. A computer-readable storage medium according to claim 13, wherein the program further comprises instructions which, when executed by the computer, cause the computer to function as:
performing a process of lowering brightness, saturation, contrast, or resolution of the game image, a process of changing a color image that is the game image to a monochrome image, or a process of blurring the game image when the player is detected to have approached or reached a boundary of an area set as a movable range of the player in the play area or the housing of the game apparatus or when the player is detected to have moved beyond the boundary.

## Patentansprüche

1. Spielvorrichtung, umfassend:
einen Eingabeprozessabschnitt (102), der Positionsinformationen zu einem Spieler erfasst, der eine Head-Mounted Display-Vorrichtung (200) trägt und sich in einem Spielfeld in einer realen Welt oder einem Gehäuse der Spielvorrichtung bewegt;
einen Spielprozessabschnitt (100), der einen Prozess für ein von dem Spieler in einem virtuellen Spielraum, in dem eine Mehrzahl von Objekten angeordnet ist, gespieltes Spiel ausführt; und
einen Anzeigeprozessabschnitt (120), der einen Prozess des Anzeigens eines Spielbilds ausführt, bei einer Betrachtung von einem bestimmten Betrachtungspunkt in dem Spielraum auf der Head-Mounted Display-Vorrichtung;
wobei der Spielprozessabschnitt,
wenn erkannt wird, dass sich der Spieler einer Begrenzung eines Bereichs, der als Bewegungsbereich des Spielers in dem Spielfeld oder dem Gehäuse der Spielvorrichtung festgelegt ist, genähert oder diese erreicht hat, ein erstes Ereignis bewirkt, zur Ausführung eines Verhinderungsprozesses, der es verhindert, dass sich der Spieler in eine Richtung zu der Begrenzung bewegt, wobei der Spielprozessabschnitt den Verhinderungsprozess bei dem ersten Ereignis auf der Basis der Bewegungsgeschwindigkeit des Spielers steuert;
wenn erkannt wird, dass sich der Spieler über die Begrenzung des Bereichs hinaus bewegt hat, ein zweites Ereignis bewirkt, zur Ausführung mindestens eines der folgenden Prozesse: eines Prozesses des Änderns eines Bildanzeigemodus des Spielbilds, eines Prozesses des Änderns eines Spielfortschrittmodus und eines Prozesses des Beendens des Spiels; und
wobei der Spielprozessabschnitt als den Verhinderungsprozess bei dem ersten Ereignis einen Prozess des Anzeigens eines warnenden Objekts an einer Position ausführt, die der Begrenzung des Bereichs entspricht, einen Prozess des Anzeigens von Warninformationen, einen Prozess, der dafür sorgt, dass ein bestimmtes Objekt in der Richtung zu der Begrenzung erscheint, einen Prozess des Änderns eines Anzeigemodus des bestimmten Objekts in der Richtung zu der Begrenzung, oder einen Prozess, der dafür sorgt, dass ein deutliches Objekt oder ein deutliches Ereignis für den Spieler in einer anderen Richtung als der Richtung zu der Begrenzung erscheint.

2. Spielvorrichtung nach Anspruch 1,
wobei der Spielprozessabschnitt einen Prozess des Verringerung der Bildqualität des Spielbilds als den Prozess des Änderns des Bildanzeigemodus des Spielbilds ausführt.

3. Spielvorrichtung nach Anspruch 2,
wobei der Spielprozessabschnitt einen Prozess der Reduzierung der Helligkeit, der Sättigung, des Kontrasts oder der Auflösung des Spielbilds, einen Prozess der Änderung eines Farbbilds, welches das Spielbild darstellt, in ein Schwarzweißbild, oder einen Prozess der unscharfen Gestaltung des Spielbilds als den Prozess der Verringerung der Bildqualität in dem Spielbild ausführt.

4. Spielvorrichtung nach einem der Ansprüche 1 bis 3,
wobei der Spielprozessabschnitt einen Prozess des Anhaltens eines Spielfortschritts als den Prozess des Änderns des Spielfortschrittmodus ausführt.

5. Spielvorrichtung nach einem der Ansprüche 1 bis 4,
wobei der Spielprozessabschnitt, wenn erkannt wird, dass der Spieler nach dem Eintritt des zweiten Ereignisses wieder auf eine Innenseite der Begrenzung des Bereichs zurückgekehrt ist, einen Prozess der Wiederherstellung des Bildanzeigemodus des Spielbilds ausführt oder einen Prozess der Wiederherstellung des Spielfortschrittmodus.

6. Spielvorrichtung nach einem der Ansprüche 1 bis 5,
wobei der Spielprozessabschnitt den Prozess des Änderns des Bildanzeigemodus des Spielbilds, den Prozess des Änderns des Spielfortschrittmodus oder den Prozess des Beendens des Spiels bei dem zweiten Ereignis auf der Basis der Bewegungsgeschwindigkeit des Spielers ausführt.

7. Spielvorrichtung nach einem der Ansprüche 1 bis 6,
wobei der Spielprozessabschnitt einen Prozess der Vibration einer Vibrationsvorrichtung oder einen Prozess der Ausgabe eines Warntons bei dem ersten Ereignis oder dem zweiten Ereignis ausführt.

8. Spielvorrichtung nach einem der Ansprüche 1 bis 7,
wobei der Anzeigeprozessabschnitt einen Prozess des Anzeigens des Spielbilds ausführt, das ein Bild eines Publikums an einem Standort an einer Außenseite des Bereichs der Head-Mounted Display-Vorrichtung umfasst.

9. Spielvorrichtung nach einem der vorstehenden Ansprüche,
wobei der Spielprozessabschnitt in dem Fall, dass das erste Ereignis bei Annäherung an die Begrenzung des Bereichs eintritt, eine Bestimmungsentfernung steuert, um auf der Basis der Bewegungsgeschwindigkeit des Spielers zu bestimmen, dass sich der Spieler der Begrenzung angenähert hat.

10. Spielvorrichtung nach einem der vorstehenden Ansprüche,
wobei der Spielprozessabschnitt eine Eintrittszeitmessung des ersten Ereignisses auf der Basis der Bewegungsgeschwindigkeit des Spielers steuert.

11. Prozessverfahren, umfassend:
einen Eingabeprozess der Erfassung von Positionsinformationen zu einem Spieler, der eine Head-Mounted Display-Vorrichtung trägt und sich in einem Spielfeld in einer realen Welt oder einem Gehäuse einer Spielvorrichtung bewegt;
einen Spielprozess der Ausführung eines Prozesses für ein von dem Spieler in einem virtuellen Spielraum, in dem eine Mehrzahl von Objekten angeordnet ist, gespieltes Spiel; und
einen Anzeigeprozess der Ausführung eines Prozesses des Anzeigens eines Spielbilds, bei einer Betrachtung von einem bestimmten Betrachtungspunkt in dem Spielraum auf der Head-Mounted Display-Vorrichtung;
wobei der Spielprozessabschnitt folgendes umfasst:
wenn erkannt wird, dass sich der Spieler einer Begrenzung eines Bereichs, der als Bewegungsbereich des Spielers in dem Spielfeld oder dem Gehäuse der Spielvorrichtung festgelegt ist, genähert oder diese erreicht hat, Bewirken eines ersten Ereignisses zur Ausführung eines Verhinderungsprozesses, der es verhindert, dass sich der Spieler in eine Richtung zu der Begrenzung bewegt, wobei der Spielprozessabschnitt den Verhinderungsprozess bei dem ersten Ereignis auf der Basis der Bewegungsgeschwindigkeit des Spielers steuert;
wenn erkannt wird, dass sich der Spieler über die Begrenzung des Bereichs hinaus bewegt hat, Bewirken eines zweiten Ereignisses zur Ausführung mindestens eines der folgenden Prozesse: eines Prozesses des Änderns eines Bildanzeigemodus des Spielbilds, eines Prozesses des Änderns eines Spielfortschrittmodus und eines Prozesses des Beendens des Spiels; und
wobei der Spielprozessabschnitt als den Verhinderungsprozess bei dem ersten Ereignis einen Prozess des Anzeigens eines warnenden Objekts an einer Position ausführt, die der Begrenzung des Bereichs entspricht, einen Prozess des Anzeigens von Warninformationen, einen Prozess, der dafür sorgt, dass ein bestimmtes Objekt in der Richtung zu der Begrenzung erscheint, einen Prozess des Änderns eines Anzeigemodus des bestimmten Objekts in der Richtung zu der Begrenzung, oder einen Prozess, der dafür sorgt, dass ein deutliches Objekt oder ein deutliches Ereignis für den Spieler in einer anderen Richtung als der Richtung zu der Begrenzung erscheint.

12. Prozessverfahren nach Anspruch 11, das folgendes umfasst:
der Spielprozess umfasst das Ausführen eines Prozesses der Reduzierung der Helligkeit, der Sättigung, des Kontrasts oder der Auflösung des Spielbilds, eines Prozesses der Änderung eines Farbbilds, welches das Spielbild darstellt, in ein Schwarzweißbild, oder eines Prozesses der unscharfen Gestaltung des Spielbilds, wenn erkannt wird, dass sich der Spieler einer Begrenzung eines Bereichs angenähert oder diese erreicht hat, die als ein Bewegungsbereich des Spielers in dem Spielfeld oder dem Gehäuse der Spielvorrichtung festgelegt ist, oder wenn erkannt wird, dass der Spieler sich über die Begrenzung hinaus bewegt hat.

13. Computerlesbares Speichermedium, das darin ein Programm speichert, das Anweisungen umfasst, die, wenn sie durch einen Computer ausgeführt werden, bewirken, dass der Computer als folgendes arbeitet:
ein Eingabeprozessabschnitt, der Positionsinformationen zu einem Spieler erfasst, der eine Head-Mounted Display-Vorrichtung trägt und sich in einem Spielfeld in einer realen Welt oder einem Gehäuse der Spielvorrichtung bewegt;
ein Spielprozessabschnitt, der einen Prozess für ein von dem Spieler in einem virtuellen Spielraum, in dem eine Mehrzahl von Objekten angeordnet ist, gespieltes Spiel ausführt; und
ein Anzeigeprozessabschnitt, der einen Prozess des Anzeigens eines Spielbilds ausführt, bei einer Betrachtung von einem bestimmten Betrachtungspunkt in dem Spielraum auf der Head-Mounted Display-Vorrichtung;
wobei der Spielprozessabschnitt,
wenn erkannt wird, dass sich der Spieler einer Begrenzung eines Bereichs, der als Bewegungsbereich des Spielers in dem Spielfeld oder dem Gehäuse der Spielvorrichtung festgelegt ist, genähert oder diese erreicht hat, ein erstes Ereignis bewirkt, zur Ausführung eines Verhinderungsprozesses, der es verhindert, dass sich der Spieler in eine Richtung zu der Begrenzung bewegt, wobei der Spielprozessabschnitt den Verhinderungsprozess bei dem ersten Ereignis auf der Basis der Bewegungsgeschwindigkeit des Spielers steuert;
wenn erkannt wird, dass sich der Spieler über die Begrenzung des Bereichs hinaus bewegt hat, ein zweites Ereignis bewirkt, zur Ausführung mindestens eines der folgenden Prozesse: eines Prozesses des Änderns eines Bildanzeigemodus des Spielbilds, eines Prozesses des Änderns eines Spielfortschrittmodus und eines Prozesses des Beendens des Spiels; und
wobei der Spielprozessabschnitt als den Verhinderungsprozess bei dem ersten Ereignis einen Prozess des Anzeigens eines warnenden Objekts an einer Position ausführt, die der Begrenzung des Bereichs entspricht, einen Prozess des Anzeigens von Warninformationen, einen Prozess, der dafür sorgt, dass ein bestimmtes Objekt in der Richtung zu der Begrenzung erscheint, einen Prozess des Änderns eines Anzeigemodus des bestimmten Objekts in der Richtung zu der Begrenzung, oder einen Prozess, der dafür sorgt, dass ein deutliches Objekt oder ein deutliches Ereignis für den Spieler in einer anderen Richtung als der Richtung zu der Begrenzung erscheint.

14. Computerlesbares Speichermedium nach Anspruch 13, wobei das Programm ferner Anweisungen umfasst, die, wenn sie durch den Computer ausgeführt werden, bewirken, dass der Computer folgendes durchführt:
Ausführen eines Prozesses der Reduzierung der Helligkeit, der Sättigung, des Kontrasts oder der Auflösung des Spielbilds, eines Prozesses der Änderung eines Farbbilds, welches das Spielbild darstellt, in ein Schwarzweißbild, oder eines Prozesses der unscharfen Gestaltung des Spielbilds, wenn erkannt wird, dass sich der Spieler einer Begrenzung eines Bereichs angenähert oder diese erreicht hat, die als ein Bewegungsbereich des Spielers in dem Spielfeld oder dem Gehäuse der Spielvorrichtung festgelegt ist, oder wenn erkannt wird, dass der Spieler sich über die Begrenzung hinaus bewegt hat.

## Revendications

1. Appareil de jeu comprenant :
une section de traitement d'entrée (102) acquérant des informations de position sur un joueur portant un dispositif d'affichage monté sur la tête (200) et se déplaçant dans une zone de jeu dans un monde réel ou un boîtier de l'appareil de jeu ;
une section de traitement de jeu (100) exécutant un traitement pour un jeu joué par le joueur dans un espace de jeu virtuel dans lequel une pluralité d'objets sont disposés ; et
une section de traitement d'affichage (120) exécutant un traitement d'affichage d'une image de jeu telle que vue d'un point de vue donné dans l'espace de jeu sur le dispositif d'affichage monté sur la tête,
la section de traitement de jeu
provoquant, lorsqu'il est détecté que le joueur s'est approché ou a atteint une limite d'une zone définie comme une plage de déplacement du joueur dans la zone de jeu ou le boîtier de l'appareil de jeu, un premier événement pour exécuter un traitement d'empêchement qui empêche le joueur de se déplacer dans une direction vers la limite, la section de traitement de jeu commandant le traitement d'empêchement dans le premier événement en fonction de la vitesse de déplacement du joueur,
provoquant, lorsqu'il est détecté que le joueur a dépassé les limites de la zone, un second événement pour exécuter un traitement de changement d'un mode d'affichage d'image de l'image de jeu, un traitement de changement de mode de progression de jeu et/ou un traitement de fin de jeu, et
en tant que traitement d'empêchement dans le premier événement, la section de traitement de jeu exécutant un traitement d'affichage d'un objet d'alerte à une position correspondant à la limite de la zone, un traitement d'affichage d'informations d'alerte, un traitement d'apparition d'un objet donné dans la direction vers la limite, un traitement de changement d'un mode d'affichage de l'objet donné dans la direction vers la limite, ou un traitement d'apparition d'un objet notable ou de survenance d'un événement notable pour le joueur dans une direction différente de la direction vers la limite.

2. Appareil de jeu selon la revendication 1,
la section de traitement de jeu exécutant un traitement d'abaissement d'une qualité d'image de l'image de jeu en tant que traitement de changement du mode d'affichage d'image de l'image de jeu.

3. Appareil de jeu selon la revendication 2,
la section de traitement de jeu exécutant un traitement de réduction de la luminosité, de la saturation, du contraste ou de la résolution de l'image de jeu, un traitement de changement d'une image couleur qui est l'image de jeu en une image monochrome, ou un traitement de floutage de l'image de jeu en tant que traitement de réduction de la qualité d'image de l'image de jeu.

4. Appareil de jeu selon l'une quelconque des revendications 1 à 3,
la section de traitement de jeu exécutant un traitement d'arrêt d'une progression de jeu en tant que traitement de changement du mode de progression de jeu.

5. Appareil de jeu selon l'une quelconque des revendications 1 à 4,
la section de traitement de jeu exécutant, lorsqu'il est détecté que le joueur est revenu sur un côté intérieur de la limite de la zone après que le second événement s'est produit, un traitement de restauration du mode d'affichage d'image de l'image de jeu, ou un traitement de restauration du mode de progression de jeu.

6. Appareil de jeu selon l'une quelconque des revendications 1 à 5,
la section de traitement de jeu commandant le traitement de changement du mode d'affichage d'image de l'image de jeu, le traitement de changement du mode de progression de jeu ou le traitement de fin du jeu, dans le second événement, en fonction de la vitesse de déplacement du joueur.

7. Appareil de jeu selon l'une quelconque des revendications 1 à 6,
la section de traitement de jeu exécutant un traitement de vibration d'un dispositif de vibration ou un traitement d'émission d'un son d'avertissement dans le premier événement ou le second événement.

8. Appareil de jeu selon l'une quelconque des revendications 1 à 7,
la section de traitement d'affichage exécutant un traitement d'affichage de l'image de jeu comprenant une image d'un public à un emplacement sur un côté extérieur de la zone sur le dispositif d'affichage monté sur la tête.

9. Appareil de jeu selon l'une quelconque des revendications précédentes,
la section de traitement de jeu commandant, lorsque le premier événement se produit à l'approche de la limite de la zone, une distance déterminante pour déterminer que le joueur s'est approché de la limite en fonction de la vitesse de déplacement du joueur.

10. Appareil de jeu selon l'une quelconque des revendications précédentes,
la section de traitement de jeu commandant une synchronisation d'occurrence du premier événement en fonction de la vitesse de déplacement du joueur.

11. Procédé de traitement comprenant :
un traitement d'entrée d'acquisition des informations de position sur un joueur portant un dispositif d'affichage monté sur la tête et se déplaçant dans une zone de jeu dans un monde réel ou un boîtier d'un appareil de jeu ;
un traitement de jeu d'exécution d'un traitement pour un jeu joué par le joueur dans un espace de jeu virtuel dans lequel une pluralité d'objets sont disposés ; et
un traitement d'affichage d'exécution d'un traitement d'affichage d'une image de jeu telle que vue d'un point de vue donné dans l'espace de jeu sur le dispositif d'affichage monté sur la tête,
le traitement de jeu comprenant :
la provocation, lorsqu'il est détecté que le joueur s'est approché ou a atteint une limite d'une zone définie comme une plage de déplacement du joueur dans la zone de jeu ou le boîtier de l'appareil de jeu, d'un premier événement pour exécuter un traitement d'empêchement qui empêche le joueur de se déplacer dans une direction vers la limite, la section de traitement de jeu commandant le traitement d'empêchement dans le premier événement en fonction de la vitesse de déplacement du joueur,
la provocation, lorsqu'il est détecté que le joueur a dépassé les limites de la zone, d'un second événement pour exécuter un traitement de changement d'un mode d'affichage d'image de l'image de jeu, un traitement de changement de mode de progression de jeu et/ou un traitement de fin de jeu,
en tant que traitement d'empêchement dans le premier événement, la section de traitement de jeu exécutant un traitement d'affichage d'un objet d'alerte à une position correspondant à la limite de la zone, un traitement d'affichage d'informations d'alerte, un traitement d'apparition d'un objet donné dans la direction vers la limite, un traitement de changement d'un mode d'affichage de l'objet donné dans la direction vers la limite, ou un traitement d'apparition d'un objet notable ou de survenance d'un événement notable pour le joueur dans une direction différente de la direction vers la limite.

12. Procédé de traitement selon la revendication 11, comprenant les étapes suivantes :
le traitement de jeu comprenant l'exécution d'un traitement de réduction de la luminosité, de la saturation, du contraste ou de la résolution de l'image de jeu, d'un traitement de changement d'une image couleur qui est l'image de jeu en une image monochrome, ou d'un traitement de floutage de l'image de jeu lorsqu'il est détecté que le joueur s'est approché ou a atteint une limite d'une zone définie comme une plage de placement du joueur dans la zone de jeu ou le boîtier de l'appareil de jeu ou lorsqu'il est détecté que le joueur s'est déplacé au-delà de la limite.

13. Support d'informations lisible par ordinateur sur lequel est stocké un programme comprenant des instructions qui, lorsqu'elles sont exécutées par un ordinateur, amènent l'ordinateur à fonctionner comme :
une section de traitement d'entrée acquérant des informations de position sur un joueur portant un dispositif d'affichage monté sur la tête et se déplaçant dans une zone de jeu dans un monde réel ou un boîtier de l'appareil de jeu ;
une section de traitement de jeu exécutant un traitement pour un jeu joué par le joueur dans un espace de jeu virtuel dans lequel une pluralité d'objets sont disposés ; et
une section de traitement d'affichage exécutant un traitement d'affichage d'une image de jeu telle que vue d'un point de vue donné dans l'espace de jeu sur le dispositif d'affichage monté sur la tête,
la section de traitement de jeu
provoquant, lorsqu'il est détecté que le joueur s'est approché ou a atteint une limite d'une zone définie comme une plage de déplacement du joueur dans la zone de jeu ou le boîtier de l'appareil de jeu, un premier événement pour exécuter un traitement d'empêchement qui empêche le joueur de se déplacer dans une direction vers la limite, la section de traitement de jeu commandant le traitement d'empêchement dans le premier événement en fonction de la vitesse de déplacement du joueur,
provoquant, lorsqu'il est détecté que le joueur a dépassé les limites de la zone, un second événement pour exécuter un traitement de changement d'un mode d'affichage d'image de l'image de jeu, un traitement de changement de mode de progression de jeu et/ou un traitement de fin de jeu,
en tant que traitement d'empêchement dans le premier événement, la section de traitement de jeu exécutant un traitement d'affichage d'un objet d'alerte à une position correspondant à la limite de la zone, un traitement d'affichage d'informations d'alerte, un traitement d'apparition d'un objet donné dans la direction vers la limite, un traitement de changement d'un mode d'affichage de l'objet donné dans la direction vers la limite, ou un traitement d'apparition d'un objet notable ou de survenance d'un événement notable pour le joueur dans une direction différente de la direction vers la limite.

14. Support de stockage lisible par ordinateur selon la revendication 13, le programme comprenant en outre des instructions qui, lorsqu'elles sont exécutées par l'ordinateur, amènent l'ordinateur à fonctionner pour :
exécuter un traitement de réduction de la luminosité, de la saturation, du contraste ou de la résolution de l'image de jeu, un traitement de changement d'une image couleur qui est l'image de jeu en une image monochrome, ou un traitement de floutage de l'image de jeu lorsqu'il est détecté que le joueur s'est approché ou a atteint une limite d'une zone définie comme une plage de déplacement du joueur dans la zone de jeu ou le boîtier de l'appareil de jeu ou lorsqu'il est détecté que le joueur s'est déplacé au-delà de la limite.
